# EUROPEAN PATENT APPLICATION

(11) **EP 0 977 107 A2**
(43) Date of publication of application: **02.02.2000**
(21) Application number: 99113424.8
(22) Date of filing: 12.07.1999
(51) Int. Cl.: G06F 1/00

(54) **Method and system for processing information on encryption basis**

(30) Priority: 31.07.1998 JP 23001198
(71) Applicant: Victor Company of Japan, Ltd., Yokohama 221-0022 (JP)
(72) Inventor: Yokouchi, Kentaro, Yokohama-shi, Kanagawa-ken (JP)
(74) Representative: Pellmann, Hans-Bernd, Dipl.-Ing.

(57) **Abstract**

A data processing apparatus generates a random number key, and generates a first intermediate key in response to the random number key. The data processing apparatus memorizes the first intermediate key in connection with an identifier. A combination of the identifier and the random number key is transmitted from the data processing apparatus to a reproducing device. The reproducing device generates a second intermediate key in response to the random number key. A combination of the identifier and the second intermediate key is transmitted from the reproducing device to the data processing apparatus. The data processing apparatus retrieves the first intermediate key in response to the identifier transmitted from the reproducing device. The data processing apparatus decides whether or not the retrieved first intermediate key and the second intermediate key are equal to each other. The data processing apparatus and the reproducing device are disconnected from each other when the data processing apparatus decides that the retrieved first intermediate key and the second intermediate key are not equal to each other. The data processing apparatus generates a first bus key in response to the first intermediate key. The reproducing device generates a second bus key in response to the second intermediate key. Encryption and decryption of digital information transmitted between the reproducing device and the data processing apparatus are implemented in response to the first and second bus keys.

## Description

### BACKGROUND OF THE INVENTION

### Field of the Invention

This invention relates to a method of processing information on an encryption basis. This invention also relates to a system for processing information on an encryption basis.

### Description of the Related Art

There are recording mediums for storing digital information which are called digital storage media (DSM). Examples of the digital storage media are a CD (a compact disc) and a DVD (a digital versatile disc).

A conceivable DVD stores encrypted or scrambled digital information pieces representing different video titles (that is, video contents of different types) respectively. A DVD player or a DVD drive reproduces the encrypted digital information pieces from the conceivable DVD. It is desirable that the reproduced digital information pieces are re-encrypted before being transmitted to an authorized data processing apparatus such as an authorized personal computer. In this case, the authorized data processing apparatus is permitted to decrypt received information pieces and then use the decryption-resultant information pieces. It is desirable that the re-encryptions of the reproduced information pieces are independent of each other, and have different re-encryption keys respectively.

### SUMMARY OF THE INVENTION

It is a first object of this invention to provide an improved method of processing information on an encryption basis.

It is a second object of this invention to provide an improved system for processing information on an encryption basis.

A first aspect of this invention provides a method of processing information. The method comprises the steps of 1) enabling a data processing apparatus to generate a random number key; 2) enabling the data processing apparatus to generate a first intermediate key in response to the random number key; 3) enabling the data processing apparatus to memorize the first intermediate key in connection with an identifier; 4) transmitting a combination of the identifier and the random number key from the data processing apparatus to a reproducing device; 5) enabling the reproducing device to generate a second intermediate key in response to the random number key; 6) transmitting a combination of the identifier and the second intermediate key from the reproducing device to the data processing apparatus; 7) enabling the data processing apparatus to retrieve the first intermediate key in response to the identifier transmitted from the reproducing device; 8) enabling the data processing apparatus to decide whether or not the retrieved first intermediate key and the second intermediate key are equal to each other; 9) disconnecting the data processing apparatus and the reproducing device from each other when the data processing apparatus decides that the retrieved first intermediate key and the second intermediate key are not equal to each other; 10) enabling the data processing apparatus to generate a first bus key in response to the first intermediate key; 11) enabling the data processing apparatus to memorize the first bus key in connection with the identifier; 12) enabling the reproducing device to generate a second bus key in response to the second intermediate key; 13) enabling the reproducing device to memorize the second bus key in connection with the identifier; 14) transmitting a combination of the identifier and an information requesting command from the data processing apparatus to the reproducing device after the data processing apparatus decides that the retrieved first intermediate key and the second intermediate key are equal to each other; 15) enabling the reproducing device to reproduce digital information from a recording medium; 16) enabling the reproducing device to retrieve the second bus key in response to the identifier transmitted from the data processing apparatus; 17) enabling the reproducing device to encrypt the reproduced digital information into encrypted digital information in accordance with the retrieved second bus key; 18) transmitting a combination of the identifier and the encrypted digital information from the reproducing device to the data processing apparatus in response to the information requesting command; 19) enabling the data processing apparatus to retrieve the first bus key in response to the identifier transmitted from the reproducing device; and 20) enabling the data processing apparatus to decrypt the encrypted data in accordance with the retrieved first bus key.

A second aspect of this invention provides a method of processing information. The method comprises the steps of 1) enabling a reproducing device to generate a random number key; 2) enabling the reproducing device to generate a first intermediate key in response to the random number key; 3) enabling the reproducing device to memorize the first intermediate key in connection with an identifier; 4) transmitting a combination of the identifier and the random number key from the reproducing device to a data processing apparatus; 5) enabling the data processing apparatus to generate a second intermediate key in response to the random number key; 6) transmitting a combination of the identifier and the second intermediate key from the data processing apparatus to the reproducing device; 7) enabling the reproducing device to retrieve the first intermediate key in response to the identifier transmitted from the data processing apparatus; 8) enabling the reproducing device to decide whether or not the retrieved first intermediate key and the second intermediate key are equal to each other; 9) disconnecting the reproducing device and the data processing apparatus from each other when the reproducing device decides that the retrieved first intermediate key and the second intermediate key are not equal to each other; 10) enabling the reproducing device to generate a first bus key in response to the first intermediate key; 11) enabling the reproducing device to memorize the first bus key in connection with the identifier; 12) enabling the data processing apparatus to generate a second bus key in response to the second intermediate key; 13) enabling the data processing apparatus to memorize the second bus key in connection with the identifier; 14) transmitting a combination of the identifier and an information requesting command from the data processing apparatus to the reproducing device after the reproducing device decides that the retrieved first intermediate key and the second intermediate key are equal to each other; 15) enabling the reproducing device to reproduce digital information from a recording medium; 16) enabling the reproducing device to retrieve the first bus key in response to the identifier transmitted from the data processing apparatus; 17) enabling the reproducing device to encrypt the reproduced digital information into encrypted digital information in accordance with the retrieved first bus key; 18) transmitting a combination of the identifier and the encrypted digital information from the reproducing device to the data processing apparatus in response to the information requesting command; 19) enabling the data processing apparatus to retrieve the second bus key in response to the identifier transmitted from the reproducing device; and 20) enabling the data processing apparatus to decrypt the encrypted data in accordance with the retrieved second bus key.

A third aspect of this invention provides a method of processing information. The method comprises the steps of 1) transmitting an identifier requesting command from a data processing apparatus to a reproducing device; 2) enabling the reproducing device to select one identifier from among predetermined identifiers in response to the identifier requesting command; 3) transmitting the selected identifier from the reproducing device to the data processing apparatus; 4) enabling the data processing apparatus to generate a first random number key; 5) enabling the data processing apparatus to generate a first intermediate key in response to the first random number key; 6) enabling the data processing apparatus to memorize the first intermediate key in connection with the selected identifier transmitted from the reproducing device; 7) transmitting a combination of the selected identifier and the first random number key from the data processing apparatus to the reproducing device; 8) enabling the reproducing device to generate a second intermediate key in response to the first random number key; 9) transmitting a combination of the selected identifier and the second intermediate key from the reproducing device to the data processing apparatus; 10) enabling the data processing apparatus to retrieve the first intermediate key in response to the selected identifier transmitted from the reproducing device; 11) enabling the data processing apparatus to decide whether or not the retrieved first intermediate key and the second intermediate key are equal to each other; 12) disconnecting the data processing apparatus and the reproducing device from each other when the data processing apparatus decides that the retrieved first intermediate key and the second intermediate key are not equal to each other; 13) enabling the reproducing device to generate a second random number key after the data processing apparatus decides that the retrieved first intermediate key and the second intermediate key are equal to each other; 14) enabling the reproducing device to generate a third intermediate key in response to the second random number key; 15) enabling the reproducing device to memorize the third intermediate key in connection with the selected identifier; 16) transmitting a combination of the selected identifier and the second random number key from the reproducing device to the data processing apparatus; 17) enabling the data processing apparatus to generate a fourth intermediate key in response to the second random number key; 18) transmitting a combination of the selected identifier and the fourth intermediate key from the data processing apparatus to the reproducing device; 19) enabling the reproducing device to retrieve the third intermediate key in response to the selected identifier transmitted from the data processing apparatus; 20) enabling the reproducing device to decide whether or not the retrieved third intermediate key and the fourth intermediate key are equal to each other; 21) disconnecting the reproducing device and the data processing apparatus from each other when the reproducing device decides that the retrieved third intermediate key and the fourth intermediate key are not equal to each other; 22) enabling the reproducing device to generate a first bus key in response to the second and third intermediate keys; 23) enabling the reproducing device to memorize the first bus key in connection with the selected identifier; 24) enabling the data processing apparatus to generate a second bus key in response to the first and fourth intermediate keys; 25) enabling the data processing apparatus to memorize the second bus key in connection with the identifier; 26) transmitting a combination of the selected identifier and an information requesting command from the data processing apparatus to the reproducing device after the reproducing device decides that the retrieved third intermediate key and the fourth intermediate key are equal to each other; 27) enabling the reproducing device to reproduce digital information from a recording medium; 28) enabling the reproducing device to retrieve the first bus key in response to the selected identifier transmitted from the data processing apparatus; 29) enabling the reproducing device to encrypt the reproduced digital information into encrypted digital information in accordance with the retrieved first bus key; 30) transmitting a combination of the identifier and the encrypted digital information from the reproducing device to the data processing apparatus in response to the information requesting command; 31) enabling the data processing apparatus to retrieve the second bus key in response to the identifier transmitted from the reproducing device; and 32) enabling the data processing apparatus to decrypt the encrypted data in accordance with the retrieved second bus key.

A fourth aspect of this invention provides a system for processing information. The system comprises a reproducing device; a data processing apparatus; first means provided in the data processing apparatus for generating a random number key; second means provided in the data processing apparatus for generating a first intermediate key in response to the random number key; third means provided in the data processing apparatus for memorizing the first intermediate key in connection with an identifier; fourth means for transmitting a combination of the identifier and the random number key from the data processing apparatus to the reproducing device; fifth means provided in the reproducing device for generate a second intermediate key in response to the random number key; sixth means for transmitting a combination of the identifier and the second intermediate key from the reproducing device to the data processing apparatus; seventh means provided in the data processing apparatus for retrieving the first intermediate key in response to the identifier transmitted from the reproducing device; eighth means provided in the data processing apparatus for deciding whether or not the retrieved first intermediate key and the second intermediate key are equal to each other; ninth means for disconnecting the data processing apparatus and the reproducing device from each other when the eighth means decides that the retrieved first intermediate key and the second intermediate key are not equal to each other; tenth means provided in the data processing apparatus for generating a first bus key in response to the first intermediate key; eleventh means provided in the data processing apparatus for memorizing the first bus key in connection with the identifier; twelfth means provided in the reproducing device for generating a second bus key in response to the second intermediate key; thirteenth means provided in the reproducing device for memorizing the second bus key in connection with the identifier; fourteenth means for transmitting a combination of the identifier and an information requesting command from the data processing apparatus to the reproducing device after the eight means decides that the retrieved first intermediate key and the second intermediate key are equal to each other; fifteenth means provided in the reproducing device for reproducing digital information from a recording medium; sixteenth means provided in the reproducing device for retrieving the second bus key in response to the identifier transmitted from the data processing apparatus; seventeenth means provided in the reproducing device for encrypting the reproduced digital information into encrypted digital information in accordance with the retrieved second bus key; eighteenth means for transmitting a combination of the identifier and the encrypted digital information from the reproducing device to the data processing apparatus in response to the information requesting command; nineteenth means provided in the data processing apparatus for retrieving the first bus key in response to the identifier transmitted from the reproducing device; and twentieth means provided in the data processing apparatus for decrypting the encrypted data in accordance with the retrieved first bus key.

A fifth aspect of this invention provides a system for processing information. The system comprises a reproducing device; a data processing apparatus; first means provided in the reproducing device for generating a random number key; second means provided in the reproducing device for generating a first intermediate key in response to the random number key; third means provided in the reproducing device for memorizing the first intermediate key in connection with an identifier; fourth means for transmitting a combination of the identifier and the random number key from the reproducing device to a data processing apparatus; fifth means provided in the data processing apparatus for generating a second intermediate key in response to the random number key; sixth means for transmitting a combination of the identifier and the second intermediate key from the data processing apparatus to the reproducing device; seventh means provided in the reproducing device for retrieving the first intermediate key in response to the identifier transmitted from the data processing apparatus; eighth means provided in the reproducing device for deciding whether or not the retrieved first intermediate key and the second intermediate key are equal to each other; ninth means for disconnecting the reproducing device and the data processing apparatus from each other when the eighth means decides that the retrieved first intermediate key and the second intermediate key are not equal to each other; tenth means provided in the reproducing device for generating a first bus key in response to the first intermediate key; eleventh means provided in the reproducing device for memorizing the first bus key in connection with the identifier; twelfth means provided in the data processing apparatus for generating a second bus key in response to the second intermediate key; thirteenth means provided in the data processing apparatus for memorizing the second bus key in connection with the identifier; fourteenth means for transmitting a combination of the identifier and an information requesting command from the data processing apparatus to the reproducing device after the eighth means decides that the retrieved first intermediate key and the second intermediate key are equal to each other; fifteenth means provided in the reproducing device for reproducing digital information from a recording medium; sixteenth means provided in the reproducing device for retrieving the first bus key in response to the identifier transmitted from the data processing apparatus; seventeenth means provided in the reproducing device for encrypting the reproduced digital information into encrypted digital information in accordance with the retrieved first bus key; eighteenth means for transmitting a combination of the identifier and the encrypted digital information from the reproducing device to the data processing apparatus in response to the information requesting command; nineteenth means provided in the data processing apparatus for retrieving the second bus key in response to the identifier transmitted from the reproducing device; and twentieth means provided in the data processing apparatus for decrypting the encrypted data in accordance with the retrieved second bus key.

A sixth aspect of this invention provides a system for processing information. The system comprises a reproducing device; a data processing apparatus; first means for transmitting an identifier requesting command from the data processing apparatus to the reproducing device; second means provided in the reproducing device for selecting one identifier from among predetermined identifiers in response to the identifier requesting command; third means for transmitting the selected identifier from the reproducing device to the data processing apparatus; fourth means provided in the data processing apparatus to generate a first random number key; fifth means provided in the data processing apparatus for generating a first intermediate key in response to the first random number key; sixth means provided in the data processing apparatus for memorizing the first intermediate key in connection with the selected identifier transmitted from the reproducing device; seventh means for transmitting a combination of the selected identifier and the first random number key from the data processing apparatus to the reproducing device; eighth means provided in the reproducing device for generating a second intermediate key in response to the first random number key; ninth means for transmitting a combination of the selected identifier and the second intermediate key from the reproducing device to the data processing apparatus; tenth means provided in the data processing apparatus for retrieving the first intermediate key in response to the selected identifier transmitted from the reproducing device; eleventh means provided in the data processing apparatus for deciding whether or not the retrieved first intermediate key and the second intermediate key are equal to each other; twelfth means for disconnecting the data processing apparatus and the reproducing device from each other when the eleventh means decides that the retrieved first intermediate key and the second intermediate key are not equal to each other; thirteenth means provided in the reproducing device for generating a second random number key after the eleventh means decides that the retrieved first intermediate key and the second intermediate key are equal to each other; fourteenth means provided in the reproducing device for generating a third intermediate key in response to the second random number key; fifteenth means provided in the reproducing device for memorizing the third intermediate key in connection with the selected identifier; sixteenth means for transmitting a combination of the selected identifier and the second random number key from the reproducing device to the data processing apparatus; seventeenth means provided in the data processing apparatus for generating a fourth intermediate key in response to the second random number key; eighteenth means for transmitting a combination of the selected identifier and the fourth intermediate key from the data processing apparatus to the reproducing device; nineteenth means provided in the reproducing device for retrieving the third intermediate key in response to the selected identifier transmitted from the data processing apparatus; twentieth means provided in the reproducing device for deciding whether or not the retrieved third intermediate key and the fourth intermediate key are equal to each other; twenty-first means for disconnecting the reproducing device and the data processing apparatus from each other when the twentieth means decides that the retrieved third intermediate key and the fourth intermediate key are not equal to each other; twenty-second means provided in the reproducing device for generating a first bus key in response to the second and third intermediate keys; twenty-third means provided in the reproducing device for memorizing the first bus key in connection with the selected identifier; twenty-fourth means provided in the data processing apparatus for generating a second bus key in response to the first and fourth intermediate keys; twenty-fifth means provided in the data processing apparatus for memorizing the second bus key in connection with the identifier; twenty-sixth means for transmitting a combination of the selected identifier and an information requesting command from the data processing apparatus to the reproducing device after the twentieth means decides that the retrieved third intermediate key and the fourth intermediate key are equal to each other; twenty-seventh means provided in the reproducing device for reproducing digital information from a recording medium; twenty-eighth means provided in the reproducing device for retrieving the first bus key in response to the selected identifier transmitted from the data processing apparatus; twenty-ninth means provided in the reproducing device for encrypting the reproduced digital information into encrypted digital information in accordance with the retrieved first bus key; thirtieth means for transmitting a combination of the identifier and the encrypted digital information from the reproducing device to the data processing apparatus in response to the information requesting command; thirty-first means provided in the data processing apparatus for retrieving the second bus key in response to the identifier transmitted from the reproducing device; and thirty-second means provided in the data processing apparatus for decrypting the encrypted data in accordance with the retrieved second bus key.

### BRIEF DESCRIPTION OF THE DRAWINGS

Fig. 1 is a block diagram of an information processing system according to a first embodiment of this invention.
Fig. 2 is a block diagram of a medium drive device in Fig. 1.
Fig. 3 is a block diagram of a data processing apparatus in Fig. 1.
Fig. 4 is a diagram of a command structure used in the information processing system of Fig. 1.
Fig. 5 is a diagram of a data structure used in the information processing system of Fig. 1.
Fig. 6 is a diagram of an arrangement of a storage area in a memory in Fig. 2.
Fig. 7 is a diagram of an arrangement of a storage area in a memory in Fig. 3.
Fig. 8 is a diagram of a sequence of steps of communications between the medium drive device and the data processing apparatus in Fig. 1.
Fig. 9 is a block diagram of an information processing system according to a fourth embodiment of this invention.
Fig. 10 is a block diagram of a medium drive device in an information processing system according to a fifth embodiment of this invention.
Fig. 11 is a block diagram of a data processing apparatus in the information processing system according to the fifth embodiment of this invention.
Fig. 12 is a block diagram of an encrypting and authenticating portion in Fig. 10.
Fig. 13 is a block diagram of a decrypting and authenticating portion in Fig. 11.

### DESCRIPTION OF THE PREFERRED EMBODIMENTS

### First Embodiment

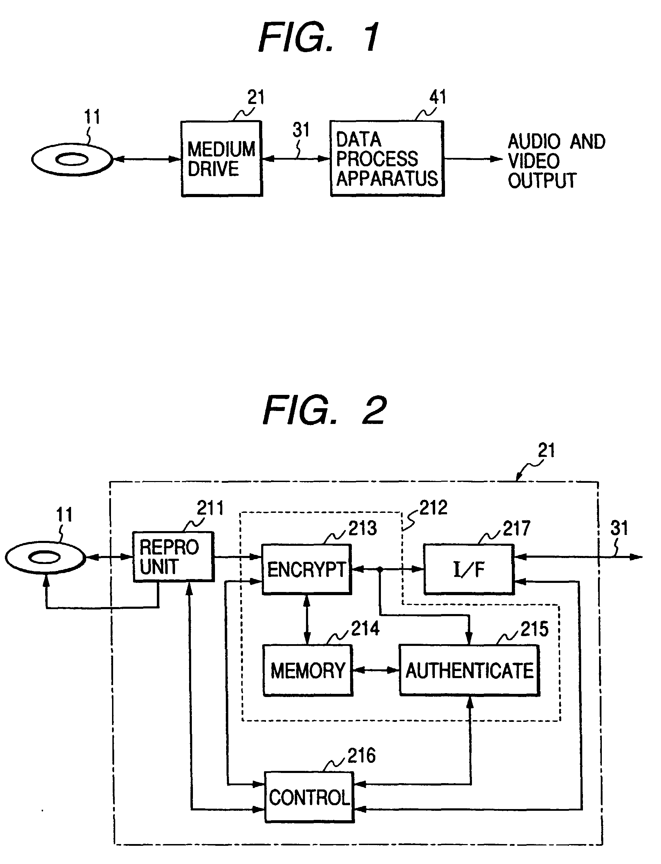

With reference to Fig. 1, an information processing system of a first embodiment of this invention includes a player or a medium drive device 21 for reading out data from a digital storage medium 11. It should be noted that the data recorded on the digital storage medium 11 may represent scrambled information (encrypted information). The medium drive device 21 is a reproducing device. The medium drive device 21 is connected via a data bus 31 to a data processing apparatus 41. In general, the data processing apparatus 41 includes a personal computer.

The data processing apparatus 41 transmits signals of commands to the medium drive device 21 via the data bus 31. The commands represented by the signals include a command of requesting the medium drive device 21 to transmit data toward the data processing apparatus 41. The medium drive device 21 transmits the data, which is read out from the digital storage medium 11, to the data processing apparatus 41 in response to the data requesting command.

In the data processing apparatus 41, an application program operates. The application program requests the medium drive device 21 to transmit data to the data processing apparatus 41. The application program controls the data processing apparatus 41 to process the data into an audio signal and a video signal, and to output the audio signal and the video signal.

As shown in Fig. 2, the medium drive device 21 includes a reproducing unit 211, an encrypting and authenticating portion 212, a controller 216, and an interface 217. The encrypting and authenticating portion 212 includes an encrypting device 213, a memory 214, and an authenticating device 215.

The reproducing unit 211 can access the digital storage medium (DSM) 11. The reproducing unit 211 is connected to the encrypting device 213 and the controller 216. The encrypting device 213 is connected to the memory 214 and the controller 216. The encrypting device 213, the authenticating device 215, and the interface 217 are connected to each other. The memory 214 is connected to the authenticating device 215. The authenticating device 215 is connected to the controller 216. The controller 216 is connected to the interface 217. The interface 217 is connected to the data processing apparatus 41 (see Fig. 1) via the data bus 31.

The reproducing unit 211 accesses the digital storage medium 11, and reproduces the data therefrom. In the case where the digital storage medium 11 is a DVD, the reproducing unit 211 includes a spindle motor for rotating the DVD, an optical pickup head for reading out the data from the DVD, a servo control circuit, a demodulator, and an error correction circuit. The interface 217 is of a known type such as an ATAPI type. The controller 216 includes, for example, a CPU, a microprocessor, or a digital signal processor programmed to control the reproducing unit 211, the encrypting device 213, the authenticating device 215, and the interface 217.

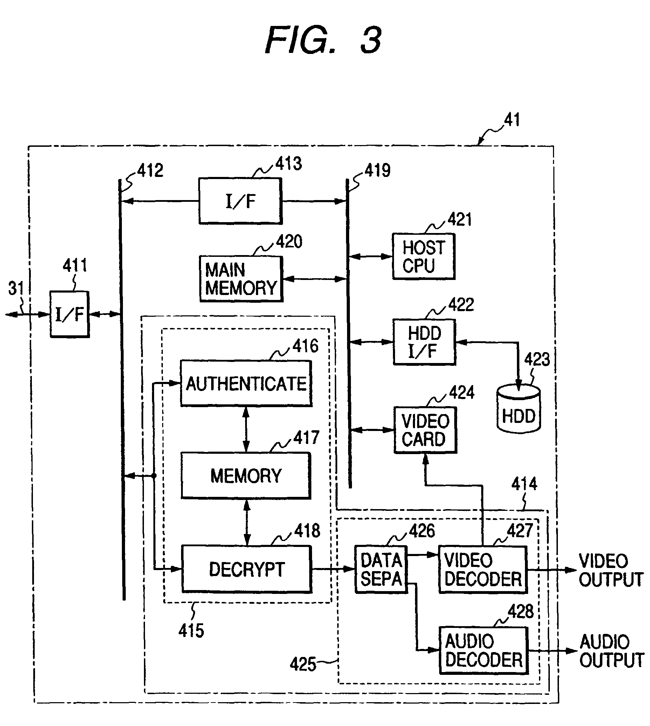

As shown in Fig. 3, the data processing apparatus 41 includes an interface 411 and a decoder card 414. The data processing apparatus 41 also includes a personal computer to which the interface 411 and the decoder card 414 are added. The interface 411 is connected to the medium drive device 21 (see Figs. 1 and 2) via the data bus 31. The interface 411 is connected via an I/O bus 412 to the personal computer and the decoder card 414. The interface 411 is of a known type such as the ATAPI type. The decoder card 414 is connected to the personal computer.

The decoder card 414 includes a decrypting and authenticating portion 415 and a decoder portion 425. The decrypting and authenticating portion 415 includes an authenticating device 416, a memory 417, and a decrypting device 418. The decoder portion 425 includes a data separator 426, a video decoder 427, and an audio decoder 428.

The authenticating device 416 is connected to the I/O bus 412 and the memory 417. The decrypting device 418 is connected to the I/O bus 412, the memory 417, and the data separator 426. The data separator 426 is connected to the video decoder 427 and the audio decoder 428. The video decoder 427 is connected to a video card 424 in the personal computer.

The personal computer includes an internal bus interface 413 connected between the I/O bus 412 and a local bus 419. Also, the personal computer includes a main memory 420, a host CPU 421, a hard disc interface (HDD I/F) 422, and the video card 424 which are connected to the local bus 419. Furthermore, the personal computer includes a hard disc drive (HDD) 423 and a display (not shown). The hard disc drive 423 is connected to the hard disc interface 422. The display is connected to the video card 424. The display includes, for example, a CRT (cathode ray tube) or an LCD (liquid crystal display).

The personal computer can control the decoder card 414, that is, the decrypting and authenticating portion 415 and the decoder portion 425.

With reference back to Fig. 2, the encrypting and authenticating portion 212 includes the memory 214. During operation of the encrypting and authenticating portion 212, the memory 214 is used in storing information pieces of keys. The encrypting and authenticating portion 212 is designed to prevent the memory 214 from being directly accessed by an external. Accordingly, it is possible to prevent a leakage of the key information pieces from the memory 214 to the data bus 31 and the controller 216.

With reference to Fig. 3, the decrypting and authenticating portion 415 includes the memory 417. During operation of the decrypting and authenticating portion 415, the memory 417 is used in storing information pieces of keys. The decrypting and authenticating portion 415 is designed to prevent the memory 417 from being directly accessed by an external. Accordingly, it is possible to prevent a leakage of the key information pieces from the memory 417.

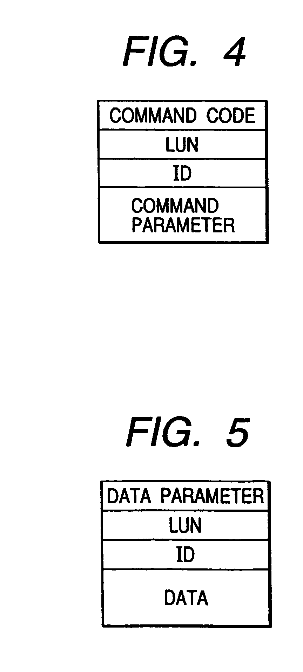

As previously indicated, the data processing apparatus 41 transmits signals of commands to the medium drive device 21 via the data bus 31. The commands are of a predetermined structure. As shown in Fig. 4, each command has a sequence of a command code, an identifier LUN, an identifier ID, and a command parameter. The command code represents a type of the related command, that is, what the related command requests the medium drive device 21 to do. The identifier LUN indicates a destination device to which the related command is directed. Thus, in this case, the identifier LUN indicates the medium drive device 21.

The medium drive device 21 transmits data blocks to the data processing apparatus 41. The data blocks are of a predetermined structure. As shown in Fig. 5, each data block has a sequence of a first area assigned to information of a data parameter, a second area assigned to information of an identifier LUN, a third area assigned to information of an identifier ID, and a fourth area assigned to data. The data in the fourth area is that read out from the digital storage medium 11. The data parameter represents The length of the related data block, or the length of the data in the fourth area. The identifier LUN indicates a sender device from which the related data block is transmitted. Thus, in this case, the identifier LUN indicates the medium drive device 21.

It should be noted That The information of the identifier ID may be omitted from the data block to reduce the length of the data block.

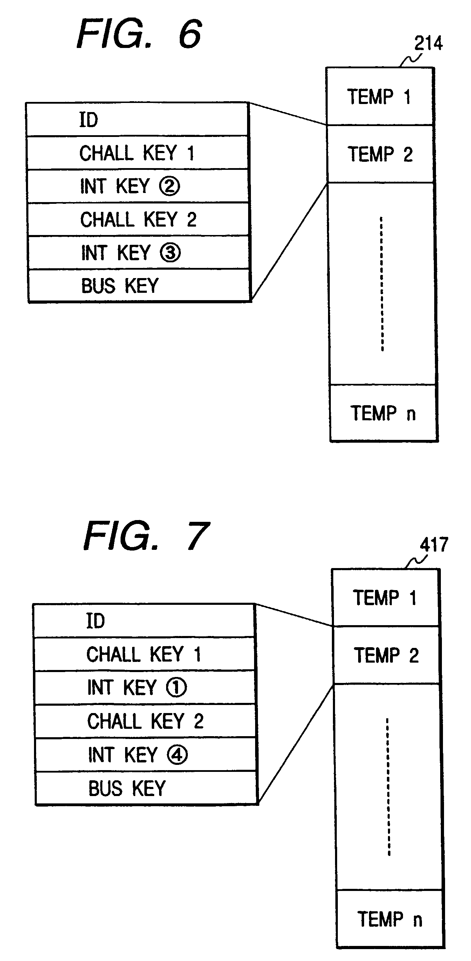

In general, the memory 214 is used in temporarily storing data pieces representing various information pieces respectively. As shown in Fig. 6, the memory 214 has a storage area divided into sub areas Temp1, Temp2, ···, and Tempn where "n" denotes a predetermined natural number equal to two or greater. Each of the sub areas Temp1, Temp2, ···, and Tempn has sections assigned to information pieces of an identifier ID and various keys respectively. The sub areas Temp1, Temp2, ···, and Tempn can be assigned to "n" different identifiers ID respectively. Accordingly, the sub areas Temp1, Temp2, ···, and Tempn can be discriminated from each other by referring to the identifiers ID. This means that the identifiers ID can be used as addresses of the sub areas Temp1, Temp2, ···, and Tempn respectively.

The memory 214 can store information pieces of identifiers ID respectively. Also, the memory 214 can store information pieces of intermediate keys which are parameters for authentication and encryption in connection with the respective identifiers ID. The intermediate keys are variables which are generated on the basis of random number keys (challenge keys) according to a predetermined algorithm or algorithms. The authenticating device 215 includes a memory which stores information of the predetermined algorithm or algorithms. When the total number of used identifiers ID is equal to "n", "n" sets of intermediate keys are generated.

In general, the memory 417 is used in temporarily storing data pieces representing various information pieces respectively. As shown in Fig. 7, the memory 417 has a storage area divided into sub areas Temp1, Temp2, ···, and Tempn where "n" denotes a predetermined natural number equal to two or greater. Each of the sub areas Temp1, Temp2, ···, and Tempn has sections assigned to information pieces of an identifier ID and various keys respectively. The sub areas Temp1, Temp2, ···, and Tempn can be assigned to "n" different identifiers ID respectively. Accordingly, the sub areas Temp1, Temp2, ···, and Tempn can be discriminated from each other by referring to the identifiers ID. This means that the identifiers ID can be used as addresses of the sub areas Temp1, Temp2, ···, and Tempn respectively.

The memory 417 can store information pieces of identifiers ID respectively. Also, the memory 417 can store information pieces of intermediate keys which are parameters for authentication and decryption in connection with the respective identifiers ID. The intermediate keys are variables which are generated on the basis of random number keys (challenge keys) according to a predetermined algorithm or algorithms. The authenticating device 416 includes a memory which stores information of the predetermined algorithm or algorithms. When the total number of used identifiers ID is equal to "n", "n" sets of intermediate keys are generated.

The encrypting device 213 in the medium drive device 21 includes, for example, a CPU, a microprocessor, or a digital signal processor programmed to implement processes indicated later. The authenticating device 215 in the medium drive device 21 includes, for example, a CPU, a microprocessor, or a digital signal processor programmed to implement processes indicated later. The authenticating device 416 in the data processing apparatus 41 includes, for example, a CPU, a microprocessor, or a digital signal processor programmed to implement processes indicated later. The decrypting device 418 in the data processing apparatus 41 includes, for example, a CPU, a microprocessor, or a digital signal processor programmed to implement processes indicated later.

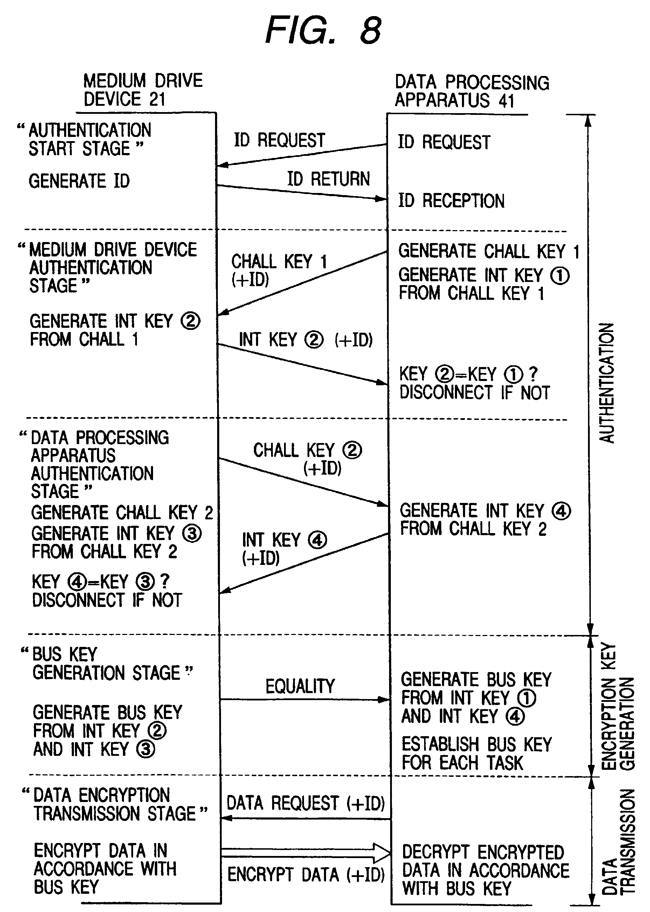

With reference to Fig. 8, a sequence of processes implemented by the data processing apparatus 41 and the medium drive device 21 has a first stage (a first phase) for authentication start, a second stage (a second phase) for authentication of a medium drive device, a third stage (a third phase) for authentication of a data processing apparatus, a fourth stage (a fourth phase) for generation of a bus key, and a fifth stage (a fifth phase) for data encryption and data transmission.

When the personal computer in the data processing apparatus 41 starts to execute an application program which has a step of requesting the medium drive device 21 to transmit data from the digital storage medium 11, the authentication start stage commences. During the authentication start stage, the data processing apparatus 41 transmits a signal of an identifier requesting command to the medium drive device 21 via the data bus 31. The signal of the identifier requesting command is generated by the personal computer.

During the authentication start stage, the medium drive device 21 receives the signal of the identifier requesting command via the data bus 31. In the medium drive device 21, the signal of the identifier requesting command travels through the interface 217 and then reaches the controller 216. The controller 216 detects the type of the present command. In other words, the controller 216 decides the present command to be an identifier requesting command. The controller 216 selects unused one of predetermined different identifiers ID in response to the identifier requesting command. It should be noted that the controller 216 includes a memory storing information of the predetermined identifiers ID, and has a function of detecting whether each of the predetermined identifiers ID is used or unused. The controller 216 generates a signal of The selected identifier ID. The controller 216 outputs the signal of the selected identifier ID to the interface 217. The interface 217 is controlled by the controller 216, transmitting the signal of the selected identifier ID to the data processing apparatus 41 via The data bus 31. The controller 216 outputs the signal of the selected identifier ID to the authenticating device 215. The authenticating device 215 stores the signal of the selected identifier ID into unused one of the sub areas Temp1, Temp2, ···, and Temp in the memory 214.

During the authentication start stage, the data processing apparatus 41 receives the signal of the selected identifier ID via the data bus 31. In the data processing apparatus 41, The signal of the selected identifier ID travels through the interface 411 and then reaches the decrypting and authenticating portion 415 via the I/O bus 412. In the decrypting and authenticating portion 415, the authenticating device 416 receives the signal of the selected identifier ID. The authenticating device 416 stores the signal of the selected identifier ID into unused one of the sub areas Temp1, Temp2, ···, and Tempn in the memory 417. Then, the authenticating device 416 informs the personal computer of the completion of the authentication start stage.

The medium-drive-device authentication stage follows the authentication start stage. During the medium-drive-device authentication stage, the authenticating device 416 in the data processing apparatus 41 generates a signal of a challenge key (a random number key) "1". The authenticating device 416 includes a random number generator for producing a random number. The challenge key "1" is determined by the produced random number. Accordingly, the contents of the present challenge key "1" are different from those of challenge keys "1" produced at other moments. The authenticating device 416 combines the signal of the selected identifier ID and the signal of the challenge key "1" into a first composite signal. The first composite signal represents a set of the selected identifier ID and the challenge key "1". The authenticating device 416 feeds the first composite signal to the interface 411 via the I/O bus 412. The data processing apparatus 41 transmits the first composite signal to the medium drive device 21 via the data bus 31.

During the medium-drive-device authentication stage, the authenticating device 416 in the data processing apparatus 41 generates a signal of an intermediate key ① on the basis of the challenge key "1" according to a predetermined algorithm. The authenticating device 416 has a memory storing information of the predetermined algorithm. The authenticating device 416 searches the memory 417 for a target sub area which stores the signal of the selected identifier ID. Specifically, the authenticating device 416 sequentially reads out signals of identifiers from the sub areas Temp1, Temp2, ···, and Tempn of the memory 417, and then decides whether or not the readout identifiers are equal to the selected identifier. The authenticating device 416 detects the target sub area by finding the readout identifier which equals the selected identifier. The authenticating device 416 accesses the target sub area of the memory 417 which stores the signal of the selected identifier ID. The authenticating device 416 writes the signal of the challenge key "1" and the signal of the intermediate key ① into the accessed sub area (the target sub area) of the memory 417, that is, the sub area of the memory 417 which stores the signal of the selected identifier ID. In this way, the signal of the challenge key "1" and the signal of the intermediate key ① are stored into the memory 417 while being made to have a relation with the signal of the selected identifier ID.

During the medium-drive-device authentication stage, the medium drive device 21 receives the first composite signal of the selected identifier ID and the challenge key "1" via the data bus 31. In the medium drive device 21, the first composite signal travels through the interface 217 and then reaches the authenticating device 215. The authenticating device 215 extracts the signal of the selected identifier ID from the first composite signal. The authenticating device 215 extracts the signal of the challenge key "1" from the first composite signal. The authenticating device 215 generates a signal of an intermediate key ② on the basis of the challenge key "1" according to a predetermined algorithm which is equal to the intermediate-key-①-generating algorithm used in the authenticating device 416 in The data processing apparatus 41. The authenticating device 215 has a memory storing information of the predetermined algorithm. The authenticating device 215 searches The memory 214 for a target sub area which stores the signal of the selected identifier ID. Specifically, the authenticating device 215 sequentially reads out signals of identifiers from the sub areas Temp1, Temp2, ···, and Tempn of the memory 214, and then decides whether or not the readout identifiers are equal to the selected identifier. The authenticating device 215 detects the target sub area by finding the readout identifier which equals the selected identifier. The authenticating device 215 accesses the target sub area of the memory 214 which stores the signal of the selected identifier ID. The authenticating device 215 writes the signal of the challenge key "1" and the signal of the intermediate key ② into the accessed sub area (the target sub area) of the memory 214, that is, the sub area of the memory 214 which stores the signal of the selected identifier ID. In this way, the signal of the challenge key "1" and the signal of the intermediate key ② are stored into the memory 214 while being made to have a relation with the signal of the selected identifier ID.

During the medium-drive-device authentication stage, the authenticating device 215 combines the signal of the selected identifier ID and the signal of the intermediate key ② into a second composite signal. The second composite signal represents a set of the selected identifier ID and the intermediate key ②. The authenticating device 215 feeds the second composite signal to the interface 217. The interface 217 is controlled by the controller 216, transmitting the second composite signal to the data processing apparatus 41 via the data bus 31.

During the medium-drive-device authentication stage, the data processing apparatus 41 receives the second composite signal via the data bus 31. The second composite signal represents a set of the selected identifier ID and the intermediate key ②. In the data processing apparatus 41, the second composite signal travels through the interface 411 and then reaches the decrypting and authenticating portion 415 via the I/O bus 412. In the decrypting and authenticating portion 415, the authenticating device 416 receives the second composite signal. The authenticating device 416 extracts the signal of the intermediate key ② from the second composite signal. The authenticating device 416 extracts the signal of the selected identifier ID from the second composite signal. The authenticating device 416 searches the memory 417 for a target sub area which stores the signal of the selected identifier ID. Specifically, the authenticating device 416 sequentially reads out signals of identifiers from the sub areas Temp1, Temp2, ···, and Tempn of the memory 417, and then decides whether or not the readout identifiers are equal to the selected identifier. The authenticating device 416 detects the target sub area by finding the readout identifier which equals the selected identifier. The authenticating device 416 accesses the target sub area of the memory 417 which stores the signal of the selected identifier ID. The authenticating device 416 reads out the signal of the intermediate key ① from The accessed sub area (the target sub area) of the memory 417. The authenticating device 416 compares the intermediate key ① and the intermediate key ② to decide whether or not the two keys are equal to each other. When it is decided that the intermediate key ① and The intermediate key ② are not equal to each other, the authenticating device 416 inhibits further communication between the data processing apparatus 41 and the medium drive device 21. In other words, the data processing apparatus 41 is disconnected from the medium drive device 21. When it is decided that the intermediate key ① and the intermediate key ② are equal to each other, the data-processing-apparatus authentication stage is commenced. Specifically, the authenticating device 416 informs the personal computer that the intermediate key ① and The intermediate key ② are equal to each other. The personal computer generates a signal of an authentication requesting command in response to the key equality information. The data processing apparatus 41 transmits the signal of the authentication requesting command to the medium drive device 21 via the data bus 31. The signal of the authentication requesting command contains the signal of the selected identifier ID.

During the data-processing-apparatus authentication stage, the medium drive device 21 receives the signal of the authentication requesting command via the data bus 31. In the medium drive device 21, the signal of the authentication requesting command travels through the interface 217 and then reaches the controller 216. The controller 216 detects the type of the present command. In other words, the controller 216 decides the present command to be an authentication requesting command. The controller 216 controls the authenticating device 215 in response to the authentication requesting command. The controller 216 extracts the signal of the selected identifier ID from the signal of the authentication requesting command. The controller 216 informs the authenticating device 215 of the selected identifier ID.

During the data-processing-apparatus authentication stage, the authenticating device 215 in the medium drive device 21 generates a signal of a challenge key (a random number key) "2". The authenticating device 215 includes a random number generator for producing a random number. The challenge key "2" is determined by the produced random number. Accordingly, the contents of the present challenge key "2" are different from those of challenge keys "2" produced at other moments. Furthermore, the contents of the challenge key "2" are different from those of the present challenge key "1" produced by the data processing apparatus 41. The authenticating device 215 combines the signal of the selected identifier ID and the signal of the challenge key "2" into a third composite signal. The third composite signal represents a set of the selected identifier ID and the challenge key "2". The authenticating device 215 feeds the third composite signal to the interface 217. The interface 217 is controlled by the controller 216, transmitting the third composite signal to the data processing apparatus 41 via the data bus 31.

During the data-processing-apparatus authentication stage, the authenticating device 215 in the medium drive device 21 generates a signal of an intermediate key ③ on the basis of the challenge key "2" according to a predetermined algorithm. The authenticating device 215 has a memory storing information of the predetermined algorithm. The authenticating device 215 searches the memory 214 for a target sub area which stores the signal of the selected identifier ID. Specifically, the authenticating device 215 sequentially reads out signals of identifiers from the sub areas Temp1, Temp2, ···, and Tempn of the memory 214, and then decides whether or not the readout identifiers are equal to the selected identifier. The authenticating device 215 detects the target sub area by finding the readout identifier which equals the selected identifier. The authenticating device 215 accesses the target sub area of the memory 214 which stores the signal of the selected identifier ID. The authenticating device 215 writes the signal of the challenge key "2" and the signal of the intermediate key ③ into the accessed sub area (the target sub area) of the memory 214, that is, the sub area of the memory 214 which stores the signal of the selected identifier ID. In this way, the signal of the challenge key "2" and the signal of the intermediate key ③ are stored into the memory 214 while being made to have a relation with the signal of the selected identifier ID.

During the data-processing-apparatus authentication stage, the data processing apparatus 41 receives the third composite signal of the selected identifier ID and the challenge key "2" via the data bus 31. In the data processing apparatus 41, the third composite signal travels through the interface 411 and then reaches the authenticating device 416 via the I/O bus 412. The authenticating device 416 extracts the signal of the selected identifier ID from the third composite signal. The authenticating device 416 extracts the signal of the challenge key "2" from the third composite signal. The authenticating device 416 generates a signal of an intermediate key ④ on the basis of the challenge key "2" according to a predetermined algorithm which is equal to the intermediate-key-③-generating algorithm used in the authenticating device 215 in the medium drive device 21. The authenticating device 416 has a memory storing information of the predetermined algorithm. The authenticating device 416 searches the memory 417 for a target sub area which stores the signal of the selected identifier ID. Specifically, the authenticating device 416 sequentially reads out signals of identifiers from the sub areas Temp1, Temp2, ···, and Tempn of the memory 417, and then decides whether or not the readout identifiers are equal to the selected identifier. The authenticating device 416 detects the target sub area by finding the readout identifier which equals the selected identifier. The authenticating device 416 accesses the target sub area of the memory 417 which stores the signal of the selected identifier ID. The authenticating device 416 writes the signal of the challenge key "2" and the signal of the intermediate key ④ into the accessed sub area (the target sub area) of the memory 417, that is, the sub area of the memory 417 which stores the signal of the selected identifier ID. In this way, the signal of the challenge key "2" and the signal of the intermediate key ④ are stored into the memory 417 while being made to have a relation with the signal of the selected identifier ID.

During the data-processing-apparatus authentication stage, The authenticating device 416 combines the signal of the selected identifier ID and the signal of the intermediate key ④ into a fourth composite signal. The fourth composite signal represents a set of the selected identifier ID and the intermediate key ④. The authenticating device 416 feeds the fourth composite signal to the interface 411 via the I/O bus 412. The data processing apparatus 41 transmits the fourth composite signal to the medium drive device 21 via the data bus 31.

During the data-processing-apparatus authentication stage, the medium drive device 21 receives the fourth composite signal via the data bus 31. The fourth composite signal represents a set of the selected identifier ID and the intermediate key ④. In the medium drive device 21, the fourth composite signal travels through the interface 217 and then reaches the authenticating device 215. The authenticating device 215 extracts the signal of the intermediate key ④ from the fourth composite signal. The authenticating device 215 extracts the signal of the selected identifier ID from the fourth composite signal. The authenticating device 215 searches the memory 214 for a target sub area which stores the signal of the selected identifier ID. Specifically, the authenticating device 215 sequentially reads out signals of identifiers from the sub areas Temp1, Temp2, ···, and Tempn of the memory 214, and then decides whether or not the readout identifiers are equal to the selected identifier. The authenticating device 215 detects the target sub area by finding the readout identifier which equals the selected identifier. The authenticating device 215 accesses the target sub area of the memory 214 which stores the signal of the selected identifier ID. The authenticating device 215 reads out the signal of the intermediate key ③ from the accessed sub area (the target sub area) of the memory 214. The authenticating device 215 compares the intermediate key ③ and the intermediate key ④ to decide whether or not the two keys are equal to each other. When it is decided that the intermediate key ③ and the intermediate key ④ are not equal to each other, the authenticating device 215 inhibits further communication between the medium drive device 21 and the data processing apparatus 41. In other words, the medium drive device 21 is disconnected from the data processing apparatus 41. When it is decided that the intermediate key ③ and the intermediate key ④ are equal to each other, the bus-key generation stage is commenced. Specifically, the authenticating device 215 informs the controller 216 that the intermediate key ③ and the intermediate key ④ are equal to each other. In addition, the authenticating device 215 feeds the signal of the selected identifier ID to the controller 216. The controller 216 controls the encrypting device 213 in response to the key equality information and the selected identifier ID to generate a bus key. In addition, the controller 216 outputs a signal (an equality-representing signal) to the interface 217 which represents that the intermediate key ③ and the intermediate key ④ are equal to each other. The interface 217 is controlled by the controller 216, transmitting the equality-representing signal to the data processing apparatus 41 via the data bus 31. The personal computer in the data processing apparatus 41 receives the equality-representing signal via the interface 411. The personal computer controls the decrypting device 418 in response to the equality-representing signal to generate a bus key.

During the bus-key generation stage, the controller 216 in the medium drive device 21 feeds the signal of the selected identifier ID to the encrypting device 213. The encrypting device 213 is controlled by the controller 216, searching the memory 214 for a target sub area which stores the signal of the selected identifier ID. Specifically, the encrypting device 213 sequentially reads out signals of identifiers from the sub areas Temp1, Temp2, ···, and Tempn of the memory 214, and then decides whether or not the readout identifiers are equal to the selected identifier. The encrypting device 213 detects the target sub area by finding the readout identifier which equals the selected identifier. The encrypting device 213 accesses the target sub area of the memory 214 which stores the signal of the selected identifier ID. The encrypting device 213 reads out the signal of the intermediate key ② and the signal of the intermediate key ③ from the accessed sub area (the target sub area) of the memory 214. The encrypting device 213 generates a signal of a bus key on the basis of the intermediate key ② and the intermediate key ③ according to a predetermined algorithm. The encrypting device 213 has a memory storing information of the predetermined algorithm. The encrypting device 213 accesses the target sub area of The memory 214 which stores the signal of the selected identifier ID. The encrypting device 213 writes the signal of the bus key into the accessed sub area (the target sub area) of the memory 214, that is, the sub area of the memory 214 which stores the signal of the selected identifier ID. In this way, the signal of the bus key is stored into The memory 214 while being made to have a relation with the signal of the selected identifier ID.

During the bus-key generation stage, the personal computer in the data processing apparatus 41 feeds the signal of the selected identifier ID to the decrypting device 418. The decrypting device 418 is controlled by the personal computer, searching the memory 417 for a target sub area which stores the signal of the selected identifier ID. Specifically, the decrypting device 418 sequentially reads out signals of identifiers from the sub areas Temp1, Temp2, ···, and Tempn of the memory 417, and then decides whether or not the readout identifiers are equal to the selected identifier. The decrypting device 418 detects the target sub area by finding the readout identifier which equals the selected identifier. The decrypting device 418 accesses the target sub area of the memory 417 which stores the signal of the selected identifier ID. The decrypting device 418 reads out the signal of the intermediate key ① and the signal of the intermediate key ④ from the accessed sub area (the target sub area) of the memory 417. The decrypting device 418 generates a signal of a bus key on the basis of the intermediate key ① and the intermediate key ④ according to a predetermined algorithm which is equal to the bus-key-generating algorithm used in the encrypting device 213 in the medium drive device 21. The decrypting device 418 has a memory storing information of the predetermined algorithm. The decrypting device 418 accesses the target sub area of the memory 417 which stores the signal of the selected identifier ID. The decrypting device 418 writes the signal of the bus key into the accessed sub area (the target sub area) of the memory 417, that is, the sub area of the memory 417 which stores the signal of the selected identifier ID. In this way, the signal of the bus key is stored into the memory 417 while being made to have a relation with the signal of the selected identifier ID.

The data encryption transmission stage follows the bus-key generation stage. During the data encryption transmission stage, the data processing apparatus 41 transmits a signal of a data requesting command to the medium drive device 21 via the data bus 31. The signal of the data requesting command is generated by the personal computer. The signal of the data requesting command contains the signal of the selected identifier ID.

During the data encryption transmission stage, the medium drive device 21 receives the signal of the data requesting command via the data bus 31. In the medium drive device 21, the signal of the data requesting command travels through the interface 217 and then reaches the controller 216. The controller 216 detects the type of the present command. In other words, the controller 216 decides the present command to be a data requesting command. The controller 216 extracts the signal of the selected identifier ID from the signal of the data requesting command. The controller 216 feeds the signal of the selected identifier ID to the encrypting device 213. The encrypting device 213 is controlled by the controller 216, searching the memory 214 for a target sub area which stores the signal of the selected identifier ID. Specifically, the encrypting device 213 sequentially reads out signals of identifiers from the sub areas Temp1, Temp2, ···, and Tempn of the memory 214, and then decides whether or not the readout identifiers are equal to the selected identifier. The encrypting device 213 detects the target sub area by finding the readout identifier which equals the selected identifier. The encrypting device 213 accesses the target sub area of the memory 214 which stores the signal of the selected identifier ID. The encrypting device 213 reads out the signal of the bus key from the accessed sub area (the target sub area) of the memory 214. The controller 216 controls the reproducing unit 211 in response to the signal of the data requesting command so that the reproducing unit 211 reads out contents data from the digital storage medium 11 and outputs the contents data to the encrypting device 213. The encrypting device 213 encrypts the contents data in accordance with the bus key. The encrypting device 213 combines the signal of the selected identifier ID and the encryption-resultant data into final data. The encrypting device 213 outputs the final data to the interface 217. The interface 217 is controlled by the controller 216, transmitting the final data to the data processing apparatus 41 via the data bus 31.

During the data encryption transmission stage, the data processing apparatus 41 receives the final data from the data bus 31. In the data processing apparatus 41, the final data travels through the interface 411 and then reaches the decrypting and authenticating portion 415 via the I/O bus 412. In the decrypting and authenticating portion 415, the decrypting device 418 receives the final data. The decrypting device 418 extracts the signal of the selected identifier ID from the final data. The decrypting device 418 searches the memory 417 for a target sub area which stores the signal of the selected identifier ID. Specifically, the decrypting device 418 sequentially reads out signals of identifiers from the sub areas Temp1, Temp2, ···, and Tempn of the memory 417, and then decides whether or not the readout identifiers are equal to the selected identifier. The decrypting device 418 detects the target sub area by finding the readout identifier which equals the selected identifier. The decrypting device 418 accesses the target sub area of the memory 417 which stores the signal of the selected identifier ID. The decrypting device 418 reads out the signal of the bus key from the accessed sub area (the target sub area) of the memory 417. The decrypting device 418 separates the encryption-resultant data from the final data. The decrypting device 418 decrypts the encryption-resultant data into the original contents data in accordance with the bus key. The decrypting device 418 outputs the contents data to the data separator 426. The data separator 426 divides the contents data into video data and audio data. The data separator 426 outputs the video data to the video decoder 427. The data separator 426 outputs the audio data to the audio decoder 428. The video decoder 427 decodes the video data into a video signal of a given form. The video decoder 427 outputs the video signal to an external device (not shown). In addition, the video decoder 427 outputs the video signal to the video card 424. The audio decoder 428 decodes the audio data into an audio signal of a given form. The audio decoder 428 outputs the audio signal to an external device (not shown).

Since different identifiers ID can be used as previously explained, plural processing step sets each having authentication, encryption, and decryption can be simultaneously implemented on a time sharing basis. In this case, multiple tasks can be simultaneously implemented according to an OS (operating system) for the personal computer in the data processing apparatus 41. Different bus keys are assigned to the multiple tasks respectively.

### Second Embodiment

A second embodiment of this invention is similar to the first embodiment thereof except for design changes indicated later. According to the second embodiment of this invention, a signal of an identifier ID which corresponds to a signal of a selected identifier ID is previously prepared in the data processing apparatus 41. This signal of the identifier ID is used instead of the signal of the selected identifier ID. In the second embodiment of this invention, it is unnecessary for the data processing apparatus 41 to transmit a signal of an identifier requesting command to the medium drive device 21 via the data bus 31.

### Third Embodiment

A third embodiment of this invention is similar to the first embodiment thereof except for a design change indicated later. One of the medium-drive-device authentication by the data processing apparatus 41 and the data-processing-apparatus authentication by the medium drive device 21 is omitted from the third embodiment of this invention.

### Fourth Embodiment

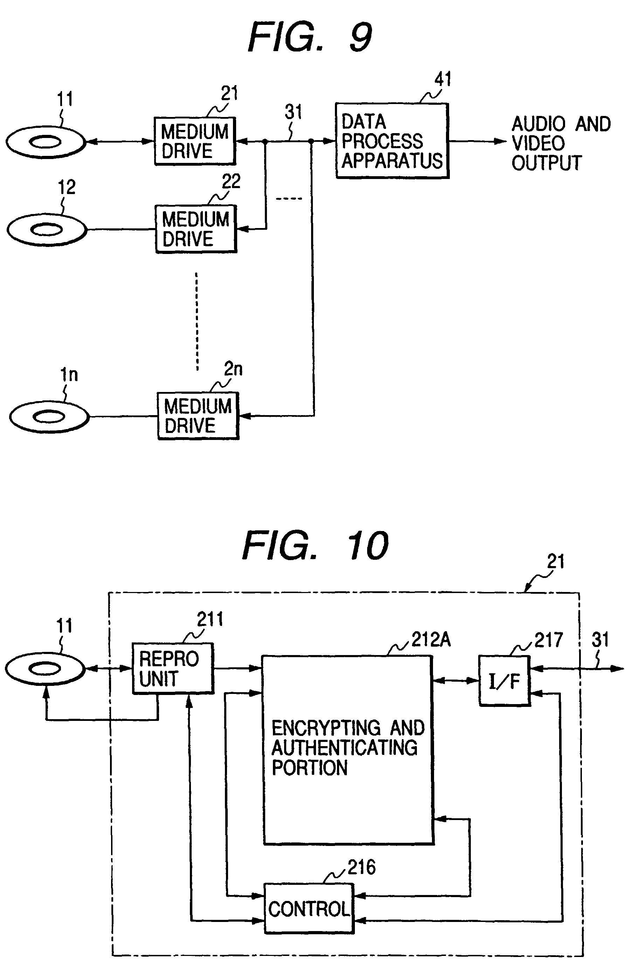

Fig. 9 shows an information processing system according to a fourth embodiment of this invention. The information processing system of Fig. 9 is similar to the information processing system of Fig. 1 except for design changes indicated later.

The information processing system of Fig. 9 includes medium drive devices (players) 22, ···, and 2n for reading out data from digital storage mediums 12, ···, and 1n, respectively. The medium drive devices 22, ···, and 2n are connected via the data bus 31 to the data processing apparatus 41.

The structures of the medium drive devices 22, ···, and 2n are similar to the structure of the medium drive device 21. Different identifiers LUN are assigned to the medium drive devices 21, 22, ···, and 2n respectively so that the medium drive devices 21, 22, ···, and 2n can be discriminated from each other. By using one of the identifiers LUN, the data processing device 41 can selectively access and communicate with one of the medium drive devices 21, 22, ···, and 2n.

### Fifth Embodiment

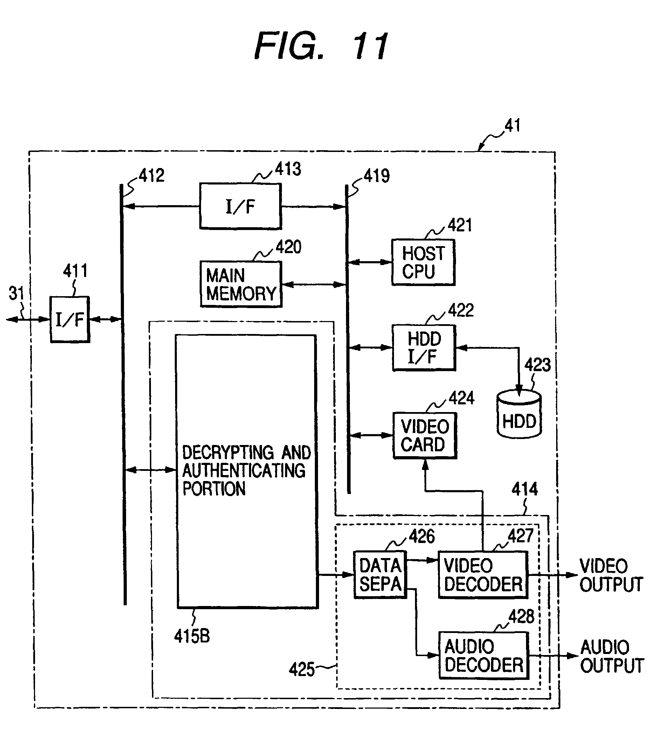

A fifth embodiment of this invention is similar to the first embodiment thereof except for design changes indicated later. Fig. 10 shows a medium drive device 21 in the fifth embodiment of this invention which includes an encrypting and authenticating portion 212A instead of the encrypting and authenticating portion 212 in Fig. 2. Fig. 11 shows a data processing apparatus 41 in the fifth embodiment of this invention which includes a decrypting and authenticating portion 415B instead of the decrypting and authenticating portion 415 in Fig. 3.

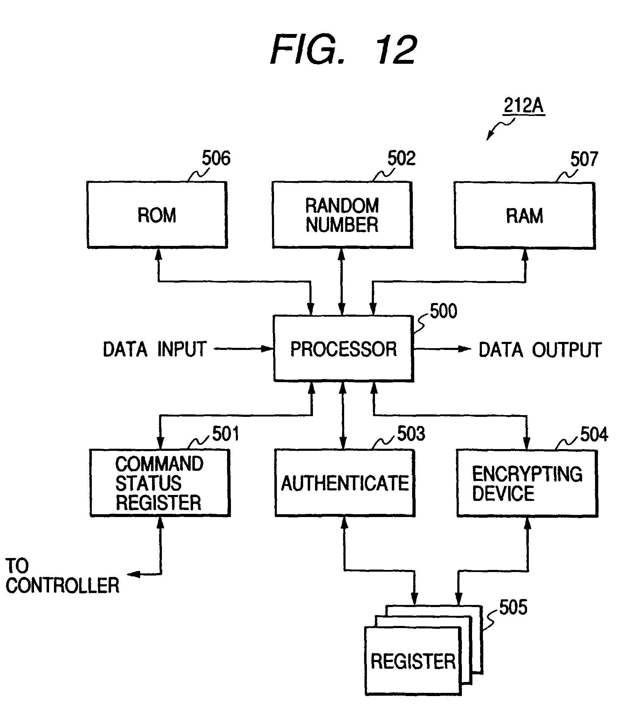

As shown in Fig. 12, the encrypting and authenticating portion 212A includes a processor 500, a register 501, a random number generator 502, an authenticating device 503, an encrypting device 504, a register (a memory) 505, a ROM 506, and a RAM 507. The processor 500 is connected between the reproducing unit 211 (see Fig. 10) and the interface 217 (see Fig. 10). The register 501, the random number generator 502, the authenticating device 503, the encrypting device 504, the ROM 506, and the RAM 507 are connected to the processor 500. The register (the memory) 505 is connected to the authenticating device 503 and the encrypting device 504. The register 501 is connected to the controller 216 (see Fig. 10).

The controller 216 and the processor 500 can load the register 501 with signals of instructions for controlling the processor 500, status-representing signals, and other signals. The processor 500 includes a microprocessor or a similar device which operates in accordance with a control program stored in an internal memory. The processor 500 also responds to the signals of the instructions in the register 501. The ROM 506 stores information of a table having numerical values for encryption. The processor 500 uses the RAM 507 in executing work defined by the control program and the instructions in the register 501. The register (the memory) 505 is similar to the memory 214 in Fig. 2.

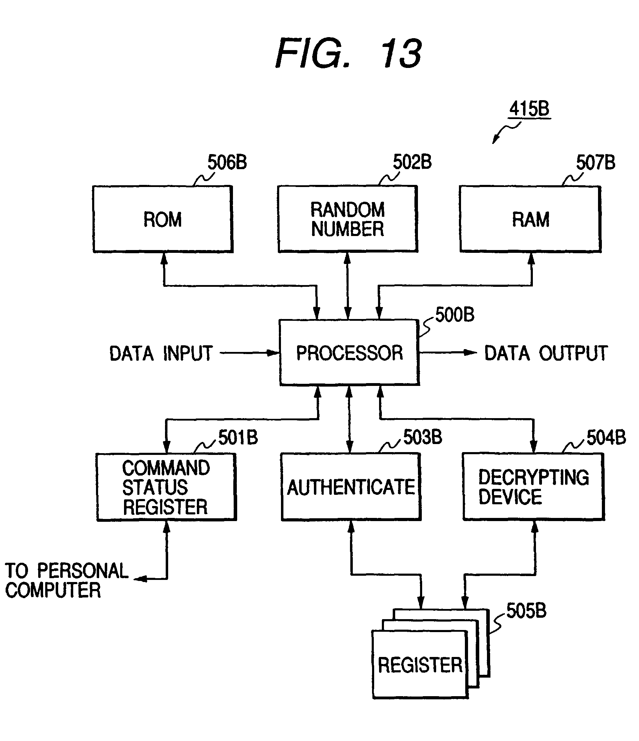

As shown in Fig. 13, the decrypting and authenticating portion 415B includes a processor 500B, a register 501B, a random number generator 502B, an authenticating device 503B, a decrypting device 504B, a register (a memory) 505B, a ROM 506B, and a RAM 507B. The processor 500B is connected between the I/O bus 412 (see Fig. 11) and the data separator 426 (see Fig. 11). The register 501B, the random number generator 502B, the authenticating device 503B, the decrypting device 504B, the ROM 506B, and the RAM 507B are connected to the processor 500B. The register (the memory) 505B is connected to the authenticating device 503B and the decrypting device 504B. The register 501B is connected to the personal computer in the data processing apparatus 41 (see Fig. 11).

The personal computer and The processor 500B can load the register 501B with signals of instructions for controlling the processor 500B, status-representing signals, and other signals. The processor 500B includes a microprocessor or a similar device which operates in accordance with a control program stored in an internal memory. The processor 500B also responds to the signals of the instructions in the register 501B. The ROM 506B stores information of a table having numerical values for decryption. The processor 500B uses The RAM 507B in executing work defined by the control program and the instructions in the register 501B. The register (the memory) 505B is similar to the memory 417 in Fig. 3.

A sequence of processes implemented by the data processing apparatus 41 and the medium drive device 21 has a first stage (a first phase) for authentication start, a second stage (a second phase) for authentication of a medium drive device, a third stage (a third phase) for authentication of a data processing apparatus, a fourth stage (a fourth phase) for generation of a bus key, and a fifth stage (a fifth phase) for data encryption and data transmission.

When the personal computer in the data processing apparatus 41 starts to execute an application program which has a step of requesting the medium drive device 21 to transmit data from the digital storage medium 11, the authentication start stage commences. During the authentication start stage, the data processing apparatus 41 transmits a signal of an identifier requesting command to the medium drive device 21 via the data bus 31. The signal of the identifier requesting command is generated by the personal computer.

During the authentication start stage, the medium drive device 21 receives the signal of the identifier requesting command via the data bus 31. In the medium drive device 21, the signal of the identifier requesting command travels through the interface 217 and then reaches the controller 216. The controller 216 detects the type of the present command. In other words, the controller 216 decides the present command to be an identifier requesting command. The controller 216 selects unused one of predetermined different identifiers ID in response to the identifier requesting command. It should be noted that the controller 216 includes a memory storing information of the predetermined identifiers ID, and has a function of detecting whether each of the predetermined identifiers ID is used or unused. The controller 216 generates a signal of the selected identifier ID. The controller 216 outputs the signal of the selected identifier ID to the interface 217. The interface 217 is controlled by the controller 216, transmitting the signal of the selected identifier ID to the data processing apparatus 41 via the data bus 31. The controller 216 outputs the signal of the selected identifier ID to the encrypting and authenticating portion 212A. In the encrypting and authenticating portion 212A, the register 501 is loaded with the signal of the selected identifier ID. The processor 500 transmits the signal of the selected identifier ID from the register 501 to the authenticating device 503. The authenticating device 503 is controlled by the processor 500, storing the signal of the selected identifier ID into unused one of sub areas Temp1, Temp2, ···, and Temp in the register (the memory) 505.

During the authentication start stage, the data processing apparatus 41 receives the signal of the selected identifier ID via the data bus 31. In the data processing apparatus 41, the signal of the selected identifier ID travels through the interface 411 and then reaches the decrypting and authenticating portion 415B via the I/O bus 412. In the decrypting and authenticating portion 415B, the processor 500B receives the signal of the selected identifier ID. The processor 500B outputs the signal of the selected identifier ID to the authenticating device 503B. The authenticating device 503B is controlled by the processor 500B, storing the signal of the selected identifier ID into unused one of sub areas Temp1, Temp2, ···, and Tempn in the register (the memory) 505B.

The medium-drive-device authentication stage follows the authentication start stage. During the medium-drive-device authentication stage, the processor 500B in the data processing apparatus 41 controls the random number generator 502B to produce a random number. The processor 500B transmits information of the produced random number from the random number generator 502B to the authenticating device 503B. The authenticating device 503B is controlled by the processor 500B, generating a signal of a challenge key (a random number key) "1" in response to the random number. The authenticating device 503B combines the signal of the selected identifier ID and the signal of the challenge key "1" into a first composite signal. The first composite signal represents a set of the selected identifier ID and the challenge key "1". The processor 500B transmits the first composite signal from the authenticating device 503B to the interface 411 via the I/O bus 412. The data processing apparatus 41 transmits the first composite signal to the medium drive device 21 via the data bus 31.

During the medium-drive-device authentication stage, the authenticating device 503B in the data processing apparatus 41 is controlled by the processor 500B, generating a signal of an intermediate key ① on the basis of the challenge key "1", according to a predetermined algorithm. The authenticating device 503B has a memory storing information of the predetermined algorithm. The authenticating device 503B searches the register (the memory) 505B for a target sub area which stores the signal of the selected identifier ID. Specifically, the authenticating device 503B sequentially reads out signals of identifiers from the sub areas of the register (the memory) 505B, and then decides whether or not the readout identifiers are equal to the selected identifier. The authenticating device 503B detects the target sub area by finding the readout identifier which equals the selected identifier. The authenticating device 503B accesses the target sub area of the register (the memory) 505B which stores the signal of the selected identifier ID. The authenticating device 503B writes the signal of the challenge key "1", and the signal of the intermediate key ① into the accessed sub area (the target sub area) of the register (the memory) 505B, that is, The sub area of the register (the memory) 505B which stores the signal of the selected identifier ID. In this way, the signal of the challenge key "1" and the signal of the intermediate key ① are stored into the register (the memory) 505B while being made to have a relation with the signal of the selected identifier ID.

During the medium-drive-device authentication stage, the medium drive device 21 receives the first composite signal of the selected identifier ID and the challenge key "1" via the data bus 31. In the medium drive device 21, the first composite signal travels through the interface 217 and then reaches the encrypting and authenticating portion 212A. In the encrypting and authenticating portion 212A, the processor 500 receives the first composite signal. The processor 500 outputs the first composite signal to the authenticating device 503. The authenticating device 503 is controlled by the processor 500, extracting the signal of the challenge key "1" from the first composite signal. In addition, the authenticating device 503 extracts the signal of the selected identifier ID from the first composite signal. The authenticating device 503 generates a signal of an intermediate key ② on the basis of the challenge key "1" according to a predetermined algorithm which is equal to the intermediate-key-①-generating algorithm used in the authenticating device 503B in the data processing apparatus 41. The authenticating device 503 has a memory storing information of the predetermined algorithm. The authenticating device 503 searches the register (the memory) 505 for a target sub area which stores the signal of the selected identifier ID. Specifically, the authenticating device 503 sequentially reads out signals of identifiers from the sub areas of the register (the memory) 505, and then decides whether or not the readout identifiers are equal to the selected identifier. The authenticating device 503 detects the target sub area by finding the readout identifier which equals the selected identifier. The authenticating device 503 accesses the target sub area of the register (the memory) 505 which stores the signal of the selected identifier ID. The authenticating device 503 writes the signal of the challenge key "1" and the signal of the intermediate key ② into the accessed sub area (the target sub area) of the register (the memory) 505, that is, the sub area of the register (the memory) 505 which stores the signal of the selected identifier ID. In this way, the signal of the challenge key "1" and the signal of the intermediate key ② are stored into the register (the memory) 505 while being made to have a relation with the signal of the selected identifier ID.

During the medium-drive-device authentication stage, the authenticating device 503 combines the signal of the selected identifier ID and the signal of the intermediate key ② into a second composite signal. The second composite signal represents a set of the selected identifier ID and the intermediate key ②. The processor 500 transmits the second composite signal from the authenticating device 503 to the interface 217. The interface 217 is controlled by the controller 216, transmitting the second composite signal to the data processing apparatus 41 via the data bus 31.

During the medium-drive-device authentication stage, the data processing apparatus 41 receives the second composite signal via the data bus 31. The second composite signal represents a set of the selected identifier ID and the intermediate key ②. In the data processing apparatus 41, the second composite signal travels through the interface 411 and then reaches the decrypting and authenticating portion 415B via the I/O bus 412. In the decrypting and authenticating portion 415B, the processor 500B receives the second composite signal. The processor 500B feeds the second composite signal to the authenticating device 503B. The authenticating device 503B is controlled by the processor 500B, extracting the signal of the intermediate key ② from the second composite signal. The authenticating device 503B extracts the signal of the selected identifier ID from the second composite signal. The authenticating device 503B searches the register (the memory) 505B for a target sub area which stores the signal of the selected identifier ID. Specifically, the authenticating device 503B sequentially reads out signals of identifiers from the sub areas of the register (the memory) 505B, and then decides whether or not the readout identifiers are equal to the selected identifier. The authenticating device 503B detects the target sub area by finding the readout identifier which equals the selected identifier. The authenticating device 503B accesses the target sub area of the register (the memory) 505B which stores the signal of the selected identifier ID. The authenticating device 503B reads out the signal of the intermediate key ① from the accessed sub area (the target sub area) of the register (the memory) 505B. The authenticating device 503B compares the intermediate key ① and the intermediate key ② to decide whether or not the two keys are equal to each other. When it is decided that the intermediate key ① and the intermediate key ② are not equal to each other, the authenticating device 503B feeds the processor 500B with a disconnection signal designed to inhibit further communication between the data processing apparatus 41 and the medium drive device 21. Thus, the data processing apparatus 41 is disconnected from the medium drive device 21. When it is decided that the intermediate key ① and the intermediate key ② are equal to each other, the data-processing-apparatus authentication stage is commenced. Specifically, the authenticating device 503B informs the processor 500B that the intermediate key ① and the intermediate key ② are equal to each other. Then, the processor 500B informs the personal computer of the key equality. The personal computer generates a signal of an authentication requesting command in response to the key equality information. The data processing apparatus 41 transmits the signal of the authentication requesting command to the medium drive device 21 via the data bus 31. The signal of the authentication requesting command contains the signal of the selected identifier ID.

During the data-processing-apparatus authentication stage, the medium drive device 21 receives the signal of the authentication requesting command via the data bus 31. In the medium drive device 21, the signal of the authentication requesting command travels through the interface 217 and then reaches the controller 216. The controller 216 detects the type of the present command. In other words, the controller 216 decides the present command to be an authentication requesting command. The controller 216 controls the encrypting and authenticating portion 212A in response to the authentication requesting command. The controller 216 extracts the signal of the selected identifier ID from the signal of the authentication requesting command. The controller 216 informs the encrypting and authenticating portion 212A of the selected identifier ID.

During the data-processing-apparatus authentication stage, the processor 500 in the medium drive device 21 controls the random number generator 502 to produce a random number. The processor 500 transmits information of the produced random number from the random number generator 502 to the authenticating device 503. The authenticating device 503 is controlled by the processor 500, generating a signal of a challenge key (a random number key) "2" in response to the random number. The processor 500 receives the signal of the selected identifier ID from the controller 216 via the register 501. The processor 500 feeds the signal of the selected identifier ID to the authenticating device 503. The authenticating device 503 combines the signal of the selected identifier ID and the signal of the challenge key "2" into a third composite signal. The third composite signal represents a set of the selected identifier ID and the challenge key "2". The processor 500 feeds the third composite signal from the authenticating device 503 to the interface 217. The interface 217 is controlled by the controller 216, transmitting the third composite signal to the data processing apparatus 41 via the data bus 31.

During the data-processing-apparatus authentication stage, the authenticating device 503 in the medium drive device 21 generates a signal of an intermediate key ③ on the basis of the challenge key "2" according to a predetermined algorithm. The authenticating device 503 has a memory storing information of the predetermined algorithm. The authenticating device 503 searches the register (the memory) 505 for a target sub area which stores the signal of the selected identifier ID. Specifically, the authenticating device 503 sequentially reads out signals of identifiers from the sub areas of the register (the memory) 505, and then decides whether or not the readout identifiers are equal to the selected identifier. The authenticating device 503 detects the target sub area by finding the readout identifier which equals the selected identifier. The authenticating device 503 accesses the target sub area of the register (the memory) 505 which stores the signal of the selected identifier ID. The authenticating device 503 writes the signal of the challenge key "2" and the signal of the intermediate key ③ into the accessed sub area (the target sub area) of the register (the memory) 505, that is, the sub area of the register (the memory) 505 which stores the signal of the selected identifier ID. In this way, the signal of the challenge key "2" and the signal of the intermediate key ③ are stored into the register (the memory) 505 while being made to have a relation with the signal of the selected identifier ID.

During the data-processing-apparatus authentication stage, the data processing apparatus 41 receives the third composite signal of the selected identifier ID and the challenge key "2" via the data bus 31. In the data processing apparatus 41, the third composite signal travels through the interface 411 and then reaches the decrypting and authenticating portion 415B via the I/O bus 412. In the decrypting and authenticating portion 415B, the processor 500B receives the third composite signal. The processor 500B feeds the third composite signal to the authenticating device 503B. The authenticating device 503B is controlled by the processor 500B, extracting the signal of the challenge key "2" from the third composite signal. In addition, the authenticating device 503B extracts the signal of the selected identifier ID from the third composite signal. The authenticating device 503B generates a signal of an intermediate key ④ on the basis of the challenge key "2" according to a predetermined algorithm which is equal to the intermediate-key-③-generating algorithm used in the authenticating device 503 in the medium drive device 21. The authenticating device 503B has a memory storing information of the predetermined algorithm. The authenticating device 503B searches the register (the memory) 505B for a target sub area which stores the signal of the selected identifier ID. Specifically, the authenticating device 503B sequentially reads out signals of identifiers from the sub areas of the register (the memory) 505B, and then decides whether or not the readout identifiers are equal to the selected identifier. The authenticating device 503B detects the target sub area by finding the readout identifier which equals the selected identifier. The authenticating device 503B accesses the target sub area of the register (the memory) 505B which stores the signal of the selected identifier ID. The authenticating device 503B writes the signal of the challenge key "2" and the signal of the intermediate key ④ into the accessed sub area (the target sub area) of the register (the memory) 505B, that is, the sub area of the register (the memory) 505B which stores the signal of the selected identifier ID. In this way, the signal of the challenge key "2" and the signal of the intermediate key ④ are stored into the register (the memory) 505B while being made to have a relation with the signal of the selected identifier ID.

During the data-processing-apparatus authentication stage, the authenticating device 503B in the data processing apparatus 41 combines the signal of the selected identifier ID and the signal of the intermediate key ④ into a fourth composite signal. The fourth composite signal represents a set of the selected identifier ID and the intermediate key ④. The processor 500B transmits the fourth composite signal from the authenticating device 503B to the interface 411 via the I/O bus 412. The data processing apparatus 41 transmits the fourth composite signal to the medium drive device 21 via the data bus 31.

During the data-processing-apparatus authentication stage, the medium drive device 21 receives the fourth composite signal via the data bus 31. The fourth composite signal represents a set of the selected identifier ID and the intermediate key ④. In The medium drive device 21, the fourth composite signal travels through the interface 217 and then reaches the encrypting and authenticating portion 212A. In the encrypting and authenticating portion 212A, the processor 500 receives the fourth composite signal. The processor 500 feeds the fourth composite signal to the authenticating device 503. The authenticating device 503 is controlled by the processor 500, extracting a signal of the intermediate key ④ from the fourth composite signal. In addition, the authenticating device 503 extracts the signal of the selected identifier ID from the fourth composite signal. The authenticating device 503 searches the register (the memory) 505 for a target sub area which stores the signal of the selected identifier ID. Specifically, the authenticating device 503 sequentially reads out signals of identifiers from the sub areas of the register (the memory) 505, and then decides whether or not the readout identifiers are equal to the selected identifier. The authenticating device 503 detects the target sub area by finding the readout identifier which equals the selected identifier. The authenticating device 503 accesses the target sub area of the register (the memory) 505 which stores the signal of the selected identifier ID. The authenticating device 503 reads out the signal of the intermediate key ③ from the accessed sub area (the target sub area) of the register (the memory) 505. The authenticating device 503 compares the intermediate key ③ and the intermediate key ④ to decide whether or not the two keys are equal to each other. When it is decided that the intermediate key ③ and the intermediate key ④ are not equal to each other, the authenticating device 503 feeds the processor 500 with a disconnection signal designed to inhibit further communication between the medium drive device 21 and the data processing apparatus 41. Thus, the medium drive device 21 is disconnected from the data processing apparatus 41. When it is decided that the intermediate key ③ and the intermediate key ④ are equal to each other, the bus-key generation stage is commenced. Specifically, the authenticating device 503 informs the processor 500 of the key equality. In addition, the authenticating device 503 feeds the signal of the selected identifier ID to the processor 500. The processor 500 controls the encrypting device 504 in response to the key equality information and the selected identifier ID to generate a bus key. Also, the processor 500 outputs a signal (an equality-representing signal) to the interface 217 which represents that the intermediate key ③ and the intermediate key ④ are equal to each other. The interface 217 is controlled by the controller 216, transmitting the equality-representing signal to the data processing apparatus 41 via The data bus 31. The personal computer in the data processing apparatus 41 receives the equality-representing signal via the interface 411. The personal computer controls the decrypting and authenticating portion 415B in response to the equality-representing signal to generate a bus key.

During the bus-key generation stage, the processor 500 in the medium drive device 21 feeds the signal of the selected identifier ID to the encrypting device 504. The encrypting device 504 is controlled by the processor 500, searching the register (the memory) 505 for a target sub area which stores the signal of the selected identifier ID. Specifically, the encrypting device 504 sequentially reads out signals of identifiers from the sub areas of the register (the memory) 505, and then decides whether or not the readout identifiers are equal to the selected identifier. The encrypting device 504 detects the target sub area by finding the readout identifier which equals the selected identifier. The encrypting device 504 accesses the target sub area of the register (the memory) 505 which stores the signal of the selected identifier ID. The encrypting device 504 reads out the signal of the intermediate key ② and the signal of the intermediate key ③ from the accessed sub area (the target sub area) of the register (the memory) 505. The encrypting device 504 generates a signal of a bus key on the basis of the intermediate key ② and the intermediate key ③ according to a predetermined algorithm. The encrypting device 504 has a memory storing information of the predetermined algorithm. The encrypting device 504 accesses the target sub area of the register (the memory) 505 which stores the signal of the selected identifier ID. The encrypting device 504 writes the signal of the bus key into the accessed sub area (the target sub area) of the register (the memory) 505, that is, the sub area of the register (the memory) 505 which stores the signal of the selected identifier ID. In this way, the signal of the bus key is stored into the register (the memory) 505 while being made to have a relation with the signal of the selected identifier ID.

During the bus-key generation stage, the personal computer in the data processing apparatus 41 feeds the signal of the selected identifier ID to the decrypting device 504B via the processor 500B. The decrypting device 504B is controlled by the processor 500B, searching the register (the memory) 505B for a target sub area which stores the signal of the selected identifier ID. Specifically, the decrypting device 504B sequentially reads out signals of identifiers from the sub areas of the register (the memory) 505B, and then decides whether or not the readout identifiers are equal to the selected identifier. The decrypting device 504B detects the target sub area by finding the readout identifier which equals the selected identifier. The decrypting device 504B accesses the target sub area of the register (the memory) 505B which stores the signal of the selected identifier ID. The decrypting device 504B reads out the signal of the intermediate key ① and the signal of the intermediate key ④ from the accessed sub area (the target sub area) of the register (the memory) 505B. The decrypting device 504B generates a signal of a bus key on the basis of the intermediate key ① and the intermediate key ④ according to a predetermined algorithm which is equal to the bus-key-generating algorithm used in the encrypting device 504 in the medium drive device 21. The decrypting device 504B has a memory storing information of the predetermined algorithm. The decrypting device 504B accesses the target sub area of the register (the memory) 505B which stores the signal of the selected identifier ID. The decrypting device 504B writes the signal of the bus key into the accessed sub area (the target sub area) of the register (the memory) 505B, that is, the sub area of the register (the memory) 505B which stores the signal of the selected identifier ID. In this way, the signal of the bus key is stored into the register (the memory) 505B while being made to have a relation with the signal of the selected identifier ID.

The data encryption transmission stage follows the bus-key generation stage. During the data encryption transmission stage, the data processing apparatus 41 transmits a signal of a data requesting command to the medium drive device 21 via the data bus 31. The signal of the data requesting command is generated by the personal computer. The signal of the data requesting command contains the signal of the selected identifier ID.

During the data encryption transmission stage, the medium drive device 21 receives the signal of the data requesting command via the data bus 31. In the medium drive device 21, the signal of the data requesting command travels through the interface 217 and then reaches the controller 216. The controller 216 detects the type of the present command. In other words, the controller 216 decides the present command to be a data requesting command. The controller 216 extracts the signal of the selected identifier ID from the signal of the data requesting command. The controller 216 feeds the signal of the selected identifier ID to the encrypting and authenticating portion 212A. In the encrypting and authenticating portion 212A, the controller 500 receives the signal of the selected identifier ID via the register 501. The controller 500 feeds the signal of the selected identifier ID to the encrypting device 504. The encrypting device 504 is controlled by the processor 500, searching the register (the memory) 505 for a target sub area which stores the signal of the selected identifier ID. Specifically, the encrypting device 504 sequentially reads out signals of identifiers from the sub areas of the register (the memory) 505, and then decides whether or not the readout identifiers are equal to the selected identifier. The encrypting device 504 detects the target sub area by finding the readout identifier which equals the selected identifier. The encrypting device 504 accesses the target sub area of the register (the memory) 505 which stores the signal of the selected identifier ID. The encrypting device 504 reads out the signal of the bus key from the accessed sub area (the target sub area) of the register (the memory) 505. The controller 216 controls the reproducing unit 211 in response to the signal of the data requesting command so that the reproducing unit 211 reads out contents data from the digital storage medium 11 and outputs the contents data to the encrypting and authenticating portion 212A. In the encrypting and authenticating portion 212A, the processor 500 receives the contents data. The processor 500 feeds the contents data to the encrypting device 504. The encrypting device 504 is controlled by the processor 500, refening to the numerical-value table in the ROM 506 and thereby encrypting the contents data in accordance with the bus key. The encrypting device 504 combines the signal of the selected identifier ID and the encryption-resultant data into final data. The processor 500 transmits the final data from the encrypting device 504 to the interface 217. The interface 217 is controlled by the controller 216, transmitting the final data to the data processing apparatus 41 via the data bus 31.

During the data encryption transmission stage, the data processing apparatus 41 receives the final data from the data bus 31. In the data processing apparatus 41, the final data travels through the interface 411 and then reaches the decrypting and authenticating portion 415B via the I/O bus 412. In the decrypting and authenticating portion 415B, the processor 500B receives the final data. The processor 500B feeds the final data to the decrypting device 504B. The decrypting device 504B is controlled by the processor 500 B, extracting the signal of the selected identifier ID from the final data. The decrypting device 504B searches the register (the memory) 505B for a target sub area which stores the signal of the selected identifier ID. Specifically, the decrypting device 504B sequentially reads out signals of identifiers from the sub areas of the register (the memory) 505B, and then decides whether or not the readout identifiers are equal to the selected identifier. The decrypting device 504B detects the target sub area by finding the readout identifier which equals the selected identifier. The decrypting device 504B accesses the target sub area of the register (the memory) 505B which stores the signal of the selected identifier ID. The decrypting device 504B reads out the signal of the bus key from the accessed sub area (the target sub area) of the register (the memory) 505B. The decrypting device 504B separates the encryption-resultant data from the final data. The decrypting device 504B is controlled by the processor 500B, referring to the numerical-value table in the ROM 506B and thereby decrypting the encryption-resultant data into the original contents data in accordance with the bus key. The processor 500B transmits the contents data from the decrypting device 504B to the data separator 426. The data separator 426 divides the contents data into video data and audio data. The data separator 426 outputs the video data to the video decoder 427. The data separator 426 outputs the audio data to the audio decoder 428. The video decoder 427 decodes the video data into a video signal of a given form. The video decoder 427 outputs the video signal to an external device (not shown). In addition, the video decoder 427 outputs the video signal to the video card 424. The audio decoder 428 decodes the audio data into an audio signal of a given form. The audio decoder 428 outputs the audio signal to an external device (not shown).

Since different identifiers ID can be used as previously explained, plural processing step sets each having authentication, encryption, and decryption can be simultaneously implemented on a time sharing basis. In this case, multiple tasks can be simultaneously implemented according to an OS (operating system) for the personal computer in the data processing apparatus 41. Different bus keys are assigned to the multiple tasks respectively.

A data processing apparatus generates a random number key, and generates a first intermediate key in response to the random number key. The data processing apparatus memorizes the first intermediate key in connection with an identifier. A combination of the identifier and the random number key is transmitted from the data processing apparatus to a reproducing device. The reproducing device generates a second intermediate key in response to the random number key. A combination of the identifier and the second intermediate key is transmitted from the reproducing device to the data processing apparatus. The data processing apparatus retrieves the first intermediate key in response to the identifier transmitted from the reproducing device. The data processing apparatus decides whether or not the retrieved first intermediate key and the second intermediate key are equal to each other. The data processing apparatus and the reproducing device are disconnected from each other when the data processing apparatus decides that the retrieved first intermediate key and the second intermediate key are not equal to each other. The data processing apparatus generates a first bus key in response to the first intermediate key. The reproducing device generates a second bus key in response to the second intermediate key. Encryption and decryption of digital information transmitted between the reproducing device and the data processing apparatus are implemented in response to the first and second bus keys.

## Claims

1. A method of processing information, comprising the steps of:
1) enabling a data processing apparatus to generate a random number key;
2) enabling the data processing apparatus to generate a first intermediate key in response to the random number key;
3) enabling the data processing apparatus to memorize the first intermediate key in connection with an identifier;
4) transmitting a combination of the identifier and the random number key from the data processing apparatus to a reproducing device;
5) enabling the reproducing device to generate a second intermediate key in response to the random number key;
6) transmitting a combination of the identifier and the second intermediate key from the reproducing device to the data processing apparatus;
7) enabling the data processing apparatus to retrieve the first intermediate key in response to the identifier transmitted from the reproducing device;
8) enabling the data processing apparatus to decide whether or not the retrieved first intermediate key and the second intermediate key are equal to each other;
9) disconnecting the data processing apparatus and the reproducing device from each other when the data processing apparatus decides that the retrieved first intermediate key and the second intermediate key are not equal to each other;
10) enabling the data processing apparatus to generate a first bus key in response to the first intermediate key;
11) enabling the data processing apparatus to memorize the first bus key in connection with the identifier;
12) enabling the reproducing device to generate a second bus key in response to the second intermediate key;
13) enabling the reproducing device to memorize the second bus key in connection with the identifier;
14) transmitting a combination of the identifier and an information requesting command from the data processing apparatus to the reproducing device after the data processing apparatus decides that the retrieved first intermediate key and the second intermediate key are equal to each other;
15) enabling the reproducing device to reproduce digital information from a recording medium;
16) enabling the reproducing device to retrieve the second bus key in response to the identifier transmitted from the data processing apparatus;
17) enabling the reproducing device to encrypt the reproduced digital information into encrypted digital information in accordance with the retrieved second bus key;
18) transmitting a combination of the identifier and the encrypted digital information from the reproducing device to the data processing apparatus in response to the information requesting command;
19) enabling the data processing apparatus to retrieve the first bus key in response to the identifier transmitted from the reproducing device; and
20) enabling the data processing apparatus to decrypt the encrypted data in accordance with the retrieved first bus key.

2. A method of processing information, comprising the steps of:
1) enabling a reproducing device to generate a random number key;
2) enabling the reproducing device to generate a first intermediate key in response to the random number key;
3) enabling the reproducing device to memorize the first intermediate key in connection with an identifier;
4) transmitting a combination of the identifier and the random number key from the reproducing device to a data processing apparatus;
5) enabling the data processing apparatus to generate a second intermediate key in response to the random number key;
6) transmitting a combination of the identifier and the second intermediate key from the data processing apparatus to the reproducing device;
7) enabling the reproducing device to retrieve the first intermediate key in response to the identifier transmitted from the data processing apparatus;
8) enabling the reproducing device to decide whether or not the retrieved first intermediate key and the second intermediate key are equal to each other;
9) disconnecting the reproducing device and the data processing apparatus from each other when the reproducing device decides that the retrieved first intermediate key and the second intermediate key are not equal to each other;
10) enabling the reproducing device to generate a first bus key in response to the first intermediate key;
11) enabling the reproducing device to memorize the first bus key in connection with the identifier;
12) enabling the data processing apparatus to generate a second bus key in response to the second intermediate key;
13) enabling the data processing apparatus to memorize the second bus key in connection with the identifier;
14) transmitting a combination of the identifier and an information requesting command from the data processing apparatus to the reproducing device after the reproducing device decides that the retrieved first intermediate key and the second intermediate key are equal to each other;
15) enabling the reproducing device to reproduce digital information from a recording medium;
16) enabling the reproducing device to retrieve the first bus key in response to the identifier transmitted from the data processing apparatus;
17) enabling the reproducing device to encrypt the reproduced digital information into encrypted digital information in accordance with the retrieved first bus key;
18) transmitting a combination of the identifier and the encrypted digital information from the reproducing device to the data processing apparatus in response to the information requesting command;
19) enabling the data processing apparatus to retrieve the second bus key in response to the identifier transmitted from the reproducing device; and
20) enabling the data processing apparatus to decrypt the encrypted data in accordance with the retrieved second bus key.

3. A method of processing information, comprising the steps of:
1) transmitting an identifier requesting command from a data processing apparatus to a reproducing device;
2) enabling the reproducing device to select one identifier from among predetermined identifiers in response to the identifier requesting command;
3) transmitting the selected identifier from the reproducing device to the data processing apparatus;
4) enabling the data processing apparatus to generate a first random number key;
5) enabling the data processing apparatus to generate a first intermediate key in response to the first random number key;
6) enabling the data processing apparatus to memorize the first intermediate key in connection with the selected identifier transmitted from the reproducing device;
7) transmitting a combination of the selected identifier and the first random number key from the data processing apparatus to the reproducing device;
8) enabling the reproducing device to generate a second intermediate key in response to the first random number key;
9) transmitting a combination of the selected identifier and the second intermediate key from the reproducing device to the data processing apparatus;
10) enabling the data processing apparatus to retrieve the first intermediate key in response to the selected identifier transmitted from the reproducing device;
11) enabling the data processing apparatus to decide whether or not the retrieved first intermediate key and the second intermediate key are equal to each other;
12) disconnecting the data processing apparatus and the reproducing device from each other when the data processing apparatus decides that the retrieved first intermediate key and the second intermediate key are not equal to each other;
13) enabling the reproducing device to generate a second random number key after the data processing apparatus decides that the retrieved first intermediate key and the second intermediate key are equal to each other;
14) enabling the reproducing device to generate a third intermediate key in response to the second random number key;
15) enabling the reproducing device to memorize the third intermediate key in connection with the selected identifier;
16) transmitting a combination of the selected identifier and the second random number key from the reproducing device to the data processing apparatus;
17) enabling the data processing apparatus to generate a fourth intermediate key in response to the second random number key;
18) transmitting a combination of the selected identifier and the fourth intermediate key from the data processing apparatus to the reproducing device;
19) enabling the reproducing device to retrieve the third intermediate key in response to the selected identifier transmitted from the data processing apparatus;
20) enabling the reproducing device to decide whether or not the retrieved third intermediate key and the fourth intermediate key are equal to each other;
21) disconnecting the reproducing device and the data processing apparatus from each other when the reproducing device decides that the retrieved third intermediate key and the fourth intermediate key are not equal to each other;
22) enabling the reproducing device to generate a first bus key in response to the second and third intermediate keys;
23) enabling the reproducing device to memorize the first bus key in connection with the selected identifier;
24) enabling the data processing apparatus to generate a second bus key in response to the first and fourth intermediate keys;
25) enabling the data processing apparatus to memorize the second bus key in connection with the identifier;
26) transmitting a combination of the selected identifier and an information requesting command from the data processing apparatus to the reproducing device after the reproducing device decides that the retrieved third intermediate key and the fourth intermediate key are equal to each other;
27) enabling the reproducing device to reproduce digital information from a recording medium;
28) enabling the reproducing device to retrieve the first bus key in response to the selected identifier transmitted from the data processing apparatus;
29) enabling the reproducing device to encrypt the reproduced digital information into encrypted digital information in accordance with the retrieved first bus key;
30) transmitting a combination of the identifier and the encrypted digital information from the reproducing device to the data processing apparatus in response to the information requesting command;
31) enabling the data processing apparatus to retrieve the second bus key in response to the identifier transmitted from the reproducing device; and
32) enabling the data processing apparatus to decrypt the encrypted data in accordance with the retrieved second bus key.

4. A system for processing information, comprising:
a reproducing device;
a data processing apparatus;
first means provided in the data processing apparatus for generating a random number key;
second means provided in the data processing apparatus for generating a first intermediate key in response to the random number key;
third means provided in the data processing apparatus for memorizing the first intermediate key in connection with an identifier;
fourth means for transmitting a combination of the identifier and the random number key from the data processing apparatus to the reproducing device;
fifth means provided in the reproducing device for generate a second intermediate key in response to the random number key;
sixth means for transmitting a combination of the identifier and the second intermediate key from the reproducing device to the data processing apparatus;
seventh means provided in the data processing apparatus for retrieving the first intermediate key in response to the identifier transmitted from the reproducing device;
eighth means provided in the data processing apparatus for deciding whether or not the retrieved first intermediate key and the second intermediate key are equal to each other;
ninth means for disconnecting the data processing apparatus and the reproducing device from each other when the eighth means decides that the retrieved first intermediate key and the second intermediate key are not equal to each other;
tenth means provided in the data processing apparatus for generating a first bus key in response to the first intermediate key;
eleventh means provided in the data processing apparatus for memorizing the first bus key in connection with the identifier;
twelfth means provided in the reproducing device for generating a second bus key in response to the second intermediate key;
thirteenth means provided in the reproducing device for memorizing the second bus key in connection with the identifier;
fourteenth means for transmitting a combination of the identifier and an information requesting command from the data processing apparatus to the reproducing device after the eighth means decides that the retrieved first intermediate key and the second intermediate key are equal to each other;
fifteenth means provided in the reproducing device for reproducing digital information from a recording medium;
sixteenth means provided in the reproducing device for retrieving the second bus key in response to the identifier transmitted from the data processing apparatus;
seventeenth means provided in the reproducing device for encrypting the reproduced digital information into encrypted digital information in accordance with the retrieved second bus key;
eighteenth means for transmitting a combination of the identifier and the encrypted digital information from the reproducing device to the data processing apparatus in response to the information requesting command;
nineteenth means provided in the data processing apparatus for retrieving the first bus key in response to the identifier transmitted from the reproducing device; and
twentieth means provided in the data processing apparatus for decrypting the encrypted data in accordance with the retrieved first bus key.

5. A system for processing information, comprising:
a reproducing device;
a data processing apparatus;
first means provided in the reproducing device for generating a random number key;
second means provided in the reproducing device for generating a first intermediate key in response to the random number key;
third means provided in the reproducing device for memorizing the first intermediate key in connection with an identifier;
fourth means for transmitting a combination of the identifier and the random number key from the reproducing device to a data processing apparatus;
fifth means provided in the data processing apparatus for generating a second intermediate key in response to the random number key;
sixth means for transmitting a combination of the identifier and the second intermediate key from the data processing apparatus to the reproducing device;
seventh means provided in the reproducing device for retrieving the first intermediate key in response to the identifier transmitted from the data processing apparatus;
eighth means provided in the reproducing device for deciding whether or not the retrieved first intermediate key and the second intermediate key are equal to each other;
ninth means for disconnecting the reproducing device and the data processing apparatus from each other when the eighth means decides that the retrieved first intermediate key and the second intermediate key are not equal to each other;
tenth means provided in the reproducing device for generating a first bus key in response to the first intermediate key;
eleventh means provided in the reproducing device for memorizing the first bus key in connection with the identifier;
twelfth means provided in the data processing apparatus for generating a second bus key in response to the second intermediate key;
thirteenth means provided in the data processing apparatus for memorizing the second bus key in connection with the identifier;
fourteenth means for transmitting a combination of the identifier and an information requesting command from the data processing apparatus to the reproducing device after the eighth means decides that the retrieved first intermediate key and the second intermediate key are equal to each other;
fifteenth means provided in the reproducing device for reproducing digital information from a recording medium;
sixteenth means provided in the reproducing device for retrieving the first bus key in response to the identifier transmitted from the data processing apparatus;
seventeenth means provided in the reproducing device for encrypting the reproduced digital information into encrypted digital information in accordance with the retrieved first bus key;
eighteenth means for transmitting a combination of the identifier and the encrypted digital information from the reproducing device to the data processing apparatus in response to the information requesting command;
nineteenth means provided in the data processing apparatus for retrieving the second bus key in response to the identifier transmitted from the reproducing device; and
twentieth means provided in the data processing apparatus for decrypting the encrypted data in accordance with the retrieved second bus key.

6. A system for processing information, comprising:
a reproducing device;
a data processing apparatus;
first means for transmitting an identifier requesting command from the data processing apparatus to the reproducing device;
second means provided in the reproducing device for selecting one identifier from among predetermined identifiers in response to the identifier requesting command;
third means for transmitting the selected identifier from the reproducing device to the data processing apparatus;
fourth means provided in the data processing apparatus to generate a first random number key;
fifth means provided in the data processing apparatus for generating a first intermediate key in response to the first random number key;
sixth means provided in the data processing apparatus for memorizing the first intermediate key in connection with the selected identifier transmitted from the reproducing device;
seventh means for transmitting a combination of the selected identifier and the first random number key from the data processing apparatus to the reproducing device;
eighth means provided in the reproducing device for generating a second intermediate key in response to the first random number key;
ninth means for transmitting a combination of the selected identifier and the second intermediate key from the reproducing device to the data processing apparatus;
tenth means provided in the data processing apparatus for retrieving the first intermediate key in response to the selected identifier transmitted from the reproducing device;
eleventh means provided in the data processing apparatus for deciding whether or not the retrieved first intermediate key and the second intermediate key are equal to each other;
twelfth means for disconnecting the data processing apparatus and the reproducing device from each other when the eleventh means decides that the retrieved first intermediate key and the second intermediate key are not equal to each other;
thirteenth means provided in the reproducing device for generating a second random number key after the eleventh means decides that the retrieved first intermediate key and the second intermediate key are equal to each other;
fourteenth means provided in the reproducing device for generating a third intermediate key in response to the second random number key;
fifteenth means provided in the reproducing device for memorizing the third intermediate key in connection with the selected identifier;
sixteenth means for transmitting a combination of the selected identifier and the second random number key from the reproducing device to the data processing apparatus;
seventeenth means provided in the data processing apparatus for generating a fourth intermediate key in response to the second random number key;
eighteenth means for transmitting a combination of the selected identifier and the fourth intermediate key from the data processing apparatus to the reproducing device;
nineteenth means provided in the reproducing device for retrieving the third intermediate key in response to the selected identifier transmitted from the data processing apparatus;
twentieth means provided in the reproducing device for deciding whether or not the retrieved third intermediate key and the fourth intermediate key are equal to each other;
twenty-first means for disconnecting the reproducing device and the data processing apparatus from each other when the twentieth means decides that the retrieved third intermediate key and the fourth intermediate key are not equal to each other;
twenty-second means provided in the reproducing device for generating a first bus key in response to the second and third intermediate keys;
twenty-third means provided in the reproducing device for memorizing the first bus key in connection with the selected identifier;
twenty-fourth means provided in the data processing apparatus for generating a second bus key in response to the first and fourth intermediate keys;
twenty-fifth means provided in the data processing apparatus for memorizing the second bus key in connection with the identifier;
twenty-sixth means for transmitting a combination of the selected identifier and an information requesting command from the data processing apparatus to the reproducing device after the twentieth means decides that the retrieved third intermediate key and the fourth intermediate key are equal to each other;
twenty-seventh means provided in the reproducing device for reproducing digital information from a recording medium;
twenty-eighth means provided in the reproducing device for retrieving the first bus key in response to the selected identifier transmitted from the data processing apparatus;
twenty-ninth means provided in the reproducing device for encrypting the reproduced digital information into encrypted digital information in accordance with the retrieved first bus key;
thirtieth means for transmitting a combination of the identifier and the encrypted digital information from the reproducing device to the data processing apparatus in response to the information requesting command;
thirty-first means provided in the data processing apparatus for retrieving the second bus key in response to the identifier transmitted from the reproducing device; and
thirty-second means provided in the data processing apparatus for decrypting the encrypted data in accordance with the retrieved second bus key.
